# EUROPEAN PATENT APPLICATION

(11) **EP 4 037 380 A1**
(43) Date of publication of application: **03.08.2022**
(21) Application number: 22161435.7
(22) Date of filing: 28.10.2019
(51) Int. Cl.: H04W 36/36, H04W 36/00

(54) **MOBILITY PROCEDURE**

(30) Priority: 01.11.2018 US 201862754153 P
(62) Divisional of application: 19802313.7
(71) Applicant: Telefonaktiebolaget LM Ericsson (publ), 164 83 Stockholm (SE)
(72) Inventor: Da Silva, Icaro Leonardo, SOLNA (SE); Eklöf, Cecilia, TÄBY (SE); Ramachandra, Pradeepa, LINKÖPING (SE)
(74) Representative: Ericsson

(57) **Abstract**

A method performed by a wireless device is disclosed, the method comprising determining that a condition to trigger a mobility procedure for the wireless device has been met, starting a timer, and determining a failure of the mobility procedure upon expiry of the timer.

## Description

### Technical Field

Examples of the present disclosure relate to a mobility procedure, such as for example a conditional mobility procedure.

### Background

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features and advantages of the enclosed embodiments will be apparent from the following description.

An RRC_CONNECTED User Equipment (UE) in LTE (LTE may also be called EUTRA) can be configured by the network to perform measurements and, upon triggering measurement reports, the network may send a handover command to the UE to handover to a different cell. In LTE the handover command may e.g. be an *RRConnectionReconfiguration* message with a field called *mobilityControllnfo,* and in NR the handover command may e.g. be an *RRCReconfiguration* with a *reconfigurationWithSync* field.

These reconfigurations, e.g. the handover commands, are actually prepared by the target cell upon a request from the source node (e.g. over X2 interface in case of EUTRA-EPC or Xn interface in case of EUTRA-5GC or New Radio, NR/5G) and takes into account the existing RRC configuration the UE has with source cell (which are provided in the internode request). Among other parameters, that reconfiguration provided by target contains all information the UE needs to access the target cell, e.g., random access configuration, a new C-RNTI assigned by the target cell and security parameters enabling the UE to calculate new security keys associated to the target cell so the UE can send a handover complete message on SRB1 (encrypted and integrity protected) based on new security keys upon accessing the target cell.

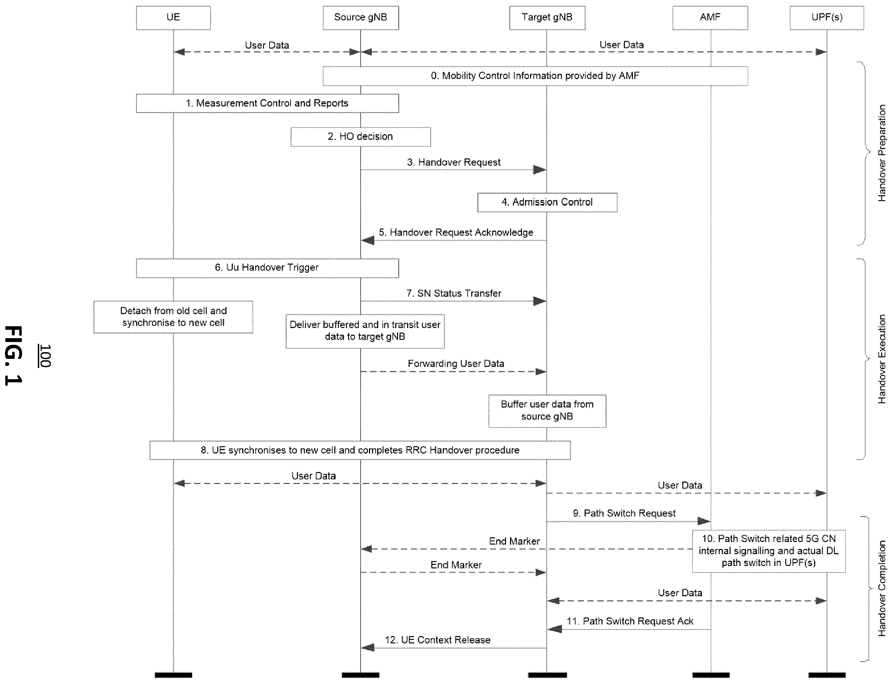

Figure 1 summarizes the flow signalling between UE, source node and target node during a handover procedure. In step 1 of Figure 1, measurement control and reports are exchanged between UE and source gNB. In step 2, the source gNB makes a handover (HO) decision. In step 3, source gNB sends a handover request to a target gNB. In step 4, target gNB performs admission control. In step 5, target gNB sends a HO request acknowledge to source gNB. In step 6, Uu handover trigger information is exchanged between UE and source gNB. The UE detaches from the old cell and synchronises to the new cell. In step 7, source gNB sends SN status transfer to target gNB, and delivers buffered and in transit user data to target gNB. The source gNB may also forward user data to target gNB. The target gNB buffers user data from source gNB. In step 8, the UE synchronises to the new cell (target gNB) and completed RRC HO procedure. User data may then be exchanged between UE and target gNB. User data may be forwarded from target gNB to User Plane Function(s). In step 9, target gNB sends a path switch request to AMF. In step 10, AMF and UPF(s) exchange path switch related 5G CN internal signalling and actual DL path switch is performed in UPF(s). User data may then be exchanged between target gNB and UPF(s). In step 11, AMF returns a path switch request ack to the target gNB. In step 12, target gNB sends a UE context release to source gNB

Both in LTE and NR, some principles exist for handovers, HO (or in more general terms, mobility in RRC_CONNECTED), in some examples, as follows:
- Mobility in RRC_CONNECTED is network-based as the network may have the best information regarding the current situation such as load conditions, resources in different nodes, available frequencies, etc. The network can also take into account the situation of many UEs in the network, for a resource allocation perspective.
- The network prepares a target cell before the UE accesses that cell. The source cell may provide the UE with the RRC configuration to be used in the target cell, including SRB1 configuration to use to send a HO complete message.
- The UE is provided by the target cell with a target C-RNTI i.e. the target identifies the UE from MSG.3 on MAC level for the HO complete message. Hence, there is no context fetching, unless a failure occurs.
- To speed up the handover, the network provides needed information on how to access the target e.g. RACH configuration, so the UE does not have to acquire SI prior to the handover.
- UE may be provided with CFRA resources. That is, the target identifies the UE from the preamble (MSG.1). The principle behind this is that the procedure may be optimized with dedicated resources.
- Security is prepared before the UE accesses the target cell i.e. keys must be refreshed before sending RRC Connection Reconfiguration Complete message, based on new keys and encrypted and integrity protected, so that the UE can be verified in the target cell.
- Both full and delta reconfiguration are supported so that the HO command can be minimized.

Two new work items for mobility enhancements in LTE and NR have started in 3GPP in release 16. The main objectives of the work items are to improve the robustness at handover and to decrease the interruption time at handover.

One problem related to robustness at handover is that the HO Command, e.g. *RRCConnectionReconfiguration* with *mobilityControllnfo* and *RRCReconfiguration* with a *reconfigurationWithSync* field, is normally sent when the radio conditions for the UE are already quite poor. As a result, the HO command may not be successfully received by the UE in time, for example if the message is segmented or if there are retransmissions.

In LTE and New Radio (NR), different solutions to increase mobility robustness have been discussed in the past. One solution discussed regarding NR is called "conditional handover" or "early handover command" (referred to herein in some examples as a conditional mobility procedure). In order to avoid the undesired dependence on the serving radio link on the time (and radio conditions) where the UE should execute the handover, the possibility to provide RRC signaling for the handover to the UE earlier should be provided. To achieve this, it should be possible to associate the HO command with a condition e.g. based on radio conditions possibly similar to the ones associated to an A3 event, where a given neighbour becomes X db better than source/serving cell. As soon as the condition is met or fulfilled, the UE executes the handover in accordance with the provided handover command. Thus, conditional handover means that the handover (or more generally, obility procedure) is triggered by fulfilment of a condition.

Such a condition could e.g. be that the quality of the target cell or beam becomes X dB stronger than the serving cell. The threshold Y used in a preceding measurement reporting event should then be chosen lower than the one in the handover execution condition. This allows the serving cell to prepare the handover upon reception of an early measurement report and to provide the *RRCConnectionReconfiguration* with *mobilityControllnfo* at a time when the radio link between the source cell and the UE is still stable. The execution of the handover may be done at a later point in time (and threshold).

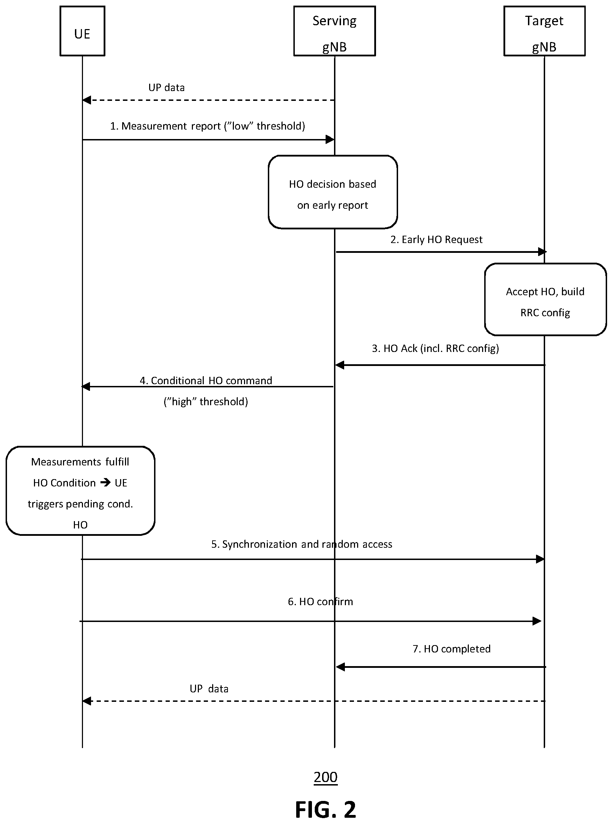

Figure 2 summarizes signalling between a UE, serving node and target node during a conditional handover procedure. In practice, there may often be many cells or beams that the UE reports as possible candidates based on its preceding RRM measurements. The network should then have the freedom to issue conditional handover commands for several of those candidates. The *RRCConnectionReconfiguration* for each of those candidates may differ e.g. in terms of the HO execution condition (RS to measure and threshold to exceed) as well as in terms of the RA preamble to be sent when a condition is met. In Figure 2, serving gNB may exchange user plane data with the UE. In step 1, the UE sends a measurement report with "low" threshold to serving gNB. The serving gNB maks a HO decision based on this early report. In step 2, the serving gNB sends an early HO request to a target gNB. The target gNB accepts the HO request and builds a RRC config. The target gNB returns a HO ack including the RRC config to the serving gNB in step 3. In step 4, a conditional HO command with "high" threshold is sent to the UE. Subsequently, measurements by the UE may fulfil the HO condition of the conditional HO command. The UE thus triggers the pending conditional handover. The UE performs synchronization and random access with the target gNB in step 5, and HO confirm is exchanged in step 6. In step 7, target gNB infoms serving gNB that HO is completed. The target gNB may then exchange user plane data with the UE.

While the UE evaluates the condition, it should continue operating per its current RRC configuration, i.e., without applying the conditional HO command. When the UE determines that the condition is fulfilled, it disconnects from the serving cell, applies the conditional HO command and connects to the target cell.

Some examples may rely on context fetching called where a condition is also provided to the UE and, upon the fulfillment of the condition the UE executes a resume action. This may comprise a method executed by a UE in RRC connected mode, where the method includes:
- Receiving a message containing at least one condition from the network and monitoring fulfilment of the provided condition;
- Upon fulfilment of the condition, triggering an RRC Resume procedure or an equivalent procedure towards at least one target cell.

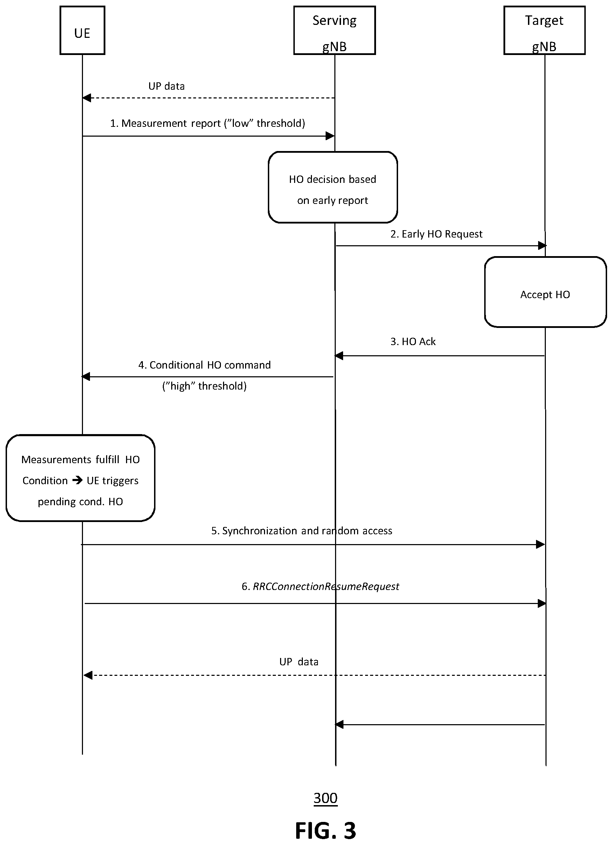

This may be summarized by the flow diagram in Figure 3, which summarizes signalling between a UE, serving node and target node during a conditional RRC Resume procedure. In Figure 3, serving gNB may exchange user plane data with the UE. In step 1, the UE sends a measurement report with "low" threshold to serving gNB. The serving gNB maks a HO decision based on this early report. In step 2, the serving gNB sends an early HO request to a target gNB. The target gNB accepts the HO request. The target gNB returns a HO ack to the serving gNB in step 3. In step 4, a conditional HO command with "high" threshold is sent to the UE. Subsequently, measurements by the UE may fulfil the HO condition of the conditional HO command. The UE thus triggers the pending conditional handover. The UE performs synchronization and random access with the target gNB in step 5, and in step 6 sends a *RRCConnectionResumeRequest* message to the target gNB. The target gNB may then exchange user plane data with the UE.

There currently exist certain challenges. For example, both handover and resume procedures have their specific failure detection mechanisms based on a failure timer. In the case of handovers (also called reconfiguration with sync in NR), that is the timer T304, while in the case of resume that is the timer T319.

In the case of handover, the timer T304 starts upon the reception of the handover command, and stops upon the completion of random access. Upon expiry of the timer before successful handover, the UE triggers an RRC reestablishment procedure.

In the case of resume, the timer T319 starts upon the transmission of an RRC resume request like message, and stops upon the reception of an RRC Resume or RRC Release (with or without a suspend configuration). Upon the expiry of T319, the UE goes to IDLE, notifies upper layers and performs NAS recovery (e.g. a registration area update). In LTE a similar timer exists, but it is called T300 (the same timer used for connection establishment).

A conditional mobility procedure (e.g. conditional handover or conditional resume) is envisioned to be specified in Rel-16 for enhancing mobility robustness in LTE and/or NR. There is currently no failure detection mechanism and, consequently, no failure counteractions upon failure detection.

One proposed solution could be to have the same solution for handover and for resume, depending which solution is finally specified (e.g. whether conditional handover or conditional resume). If conditional handover is specified, with a prior solution, the UE starts the timer T304 upon the reception of the handover message (*RRCReconfiguration* with *reconfigurationWithSync*) and, in the successful case, shall stop it upon finishing random access with the target cell. However, in CHO (conditional handover), that message may be provided when radio conditions are such that the handover is not triggered immediately, and it may take some time from the moment the UE receives the *reconfigurationWithSync* message (or equivalent) until the moment the UE completes random access in the target cell. As a result, there is a high risk that the failure timer T304 expires and UE triggers actions upon handover failure, even though there has been no failure of the conditional handover process. That may lead to many UEs configured with a conditional handover going IDLE and triggering NAS recovery (which involves significant core network signalling, more radio signalling, longer latencies, packet losses and interruption time), instead of the intended conditional handover.

If conditional handover with resume is specified, then with the alternative prior solution described above, the UE never starts the timer T319, as according to the specification, that is started upon the transmission of the RRC Resume Request like message. Hence, there would not be a protection mechanism.

### Summary

Certain aspects of the present disclosure and their embodiments may provide solutions to these or other challenges. There are, proposed herein, various embodiments which address one or more of the issues disclosed herein. For example, proposed herein is a method performed by a wireless device. The method comprises determining that a condition to trigger a mobility procedure for the wireless device has been met, starting a timer, and determining a failure of the mobility procedure upon expiry of the timer before completion of at least part of the mobility procedure.

One aspect of the present disclosure provides a method performed by a wireless device. The method comprises determining that a condition to trigger a mobility procedure for the wireless device has been met, starting a timer, and determining a failure of the mobility procedure upon expiry of the timer before completion of at least part of the mobility procedure.

Another aspect of the present disclosure provides a wireless device comprising a processor and a memory. The memory contains instructions executable by the processor such that the wireless device is operable to determine that a condition to trigger a mobility procedure for the wireless device has been met, start a timer, and determine a failure of the mobility procedure upon expiry of the timer before completion of at least part of the mobility procedure.

A further aspect of the present disclosure provides a wireless device configured to determine that a condition to trigger a mobility procedure for the wireless device has been met, start a timer, and determine a failure of the mobility procedure upon expiry of the timer before completion of at least part of the mobility procedure.

### Brief Description of the Drawings

For a better understanding of examples of the present disclosure, and to show more clearly how the examples may be carried into effect, reference will now be made, by way of example only, to the following drawings in which:
Figure 1 summarizes signalling between a UE, source node and target node during a handover procedure;
Figure 2 summarizes signalling between a UE, serving node and target node during a conditional handover procedure;
Figure 3 summarizes signalling between a UE, serving node and target node during a conditional RRC Resume procedure;
Figure 4 is a flow chart of an example of a method performed by a wireless device;
Figure 5 shows an example of a wireless network in accordance with some embodiments;
Figure 6 shows an example of a User Equipment (UE) in accordance with some embodiments;
Figure 7 is a schematic block diagram illustrating a virtualization environment in accordance with some embodiments;
Figure 8 shows a telecommunication network connected via an intermediate network to a host computer in accordance with some embodiments;
Figure 9 shows a host computer communicating via a base station with a user equipment over a partially wireless connection in accordance with some embodiments;
Figure 10 shows methods implemented in a communication system in accordance with some embodiments;
Figure 11 shows methods implemented in a communication system in accordance with some embodiments;
Figure 12 shows methods implemented in a communication system in accordance with some embodiments;
Figure 13 shows methods implemented in a communication system including a host computer, a base station and a user equipment in accordance with some embodiments; and
Figure 14 illustrates a schematic block diagram of virtualization apparatus in accordance with some embodiments.

### Detailed Description

The following sets forth specific details, such as particular embodiments or examples for purposes of explanation and not limitation. It will be appreciated by one skilled in the art that other examples may be employed apart from these specific details. In some instances, detailed descriptions of well-known methods, nodes, interfaces, circuits, and devices are omitted so as not obscure the description with unnecessary detail. Those skilled in the art will appreciate that the functions described may be implemented in one or more nodes using hardware circuitry (e.g., analog and/or discrete logic gates interconnected to perform a specialized function, ASICs, PLAs, etc.) and/or using software programs and data in conjunction with one or more digital microprocessors or general purpose computers. Nodes that communicate using the air interface also have suitable radio communications circuitry. Moreover, where appropriate the technology can additionally be considered to be embodied entirely within any form of computer-readable memory, such as solid-state memory, magnetic disk, or optical disk containing an appropriate set of computer instructions that would cause a processor to carry out the techniques described herein.

Hardware implementation may include or encompass, without limitation, digital signal processor (DSP) hardware, a reduced instruction set processor, hardware (e.g., digital or analogue) circuitry including but not limited to application specific integrated circuit(s) (ASIC) and/or field programmable gate array(s) (FPGA(s)), and (where appropriate) state machines capable of performing such functions.

Certain embodiments of this disclosure may provide one or more of the following technical advantage(s). Example methods comprise a protection failure mechanism for conditional mobility procedure based on a timer that starts upon the triggering of the conditional mobility, stops upon the successful completion of the conditional mobility procedure and, upon expiry, leads to the detection of a failure and actions upon, including the triggering of a procedure where the UE attempts to efficiently regain connectivity.

The first benefit is to define a predictable UE behaviour, where the UE may in some examples detect the failure of a conditional mobility procedure and, upon its detection, perform actions to regain connectivity e.g. via reestablishment.

Also, some example methods may avoid the UE relying on the existing mechanism for timer T304 that is activated upon the reception of a handover command message (or equivalent) and, consequently, may reduce the risk of unnecessary early triggers. Notice also that the time duration from the moment the UE receives the conditional message until the time the UE completes random access in the target cell is much more unpredictable than the time duration from the moment the UE starts to synchronize with the target cell until the time it completes the random access procedure, which is what is proposed in examples of this disclosure.

Some of the embodiments contemplated herein will now be described more fully with reference to the accompanying drawings. Other embodiments, however, are contained within the scope of the subject matter disclosed herein, the disclosed subject matter should not be construed as limited to only the embodiments set forth herein; rather, these embodiments are provided by way of example to convey the scope of the subject matter to those skilled in the art.

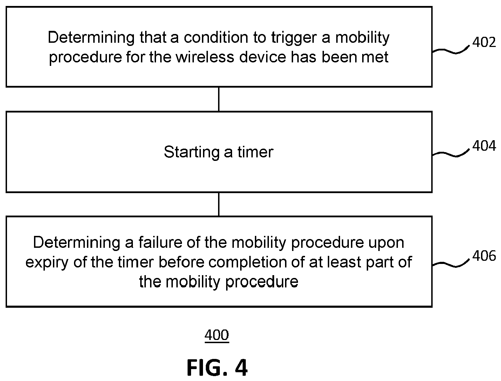

In some embodiments, there is provided a method 400 shown in Figure 4, which is a flow chart of an example of a method 400 performed by a wireless device. The method comprises, in step 402, determining that a condition to trigger a mobility procedure for the wireless device has been met. For example, this may comprise determining that the signal strength of a candidate target cell (e.g. a cell to which the wireless device may move from the currently serving cell) is above a threshold level, and/or that the signal strength of a candidate target cell is greater than the signal strength of a currently serving cell for the wireless device by a threshold amount. The signal strength of a cell may be for example the strength of a signal (e.g. a reference signal) from the cell, measured by the wireless device.

The method 400 also comprises, in step 404, starting a timer, for example in response to determining that the condition to trigger the mobility procedure has been met. The method 400 also comprises, in step 406, determining a failure of the mobility procedure upon expiry of the timer before completion of at least part of the mobility procedure. For example, the timer may count up or down from a first value to a second value, wherein when the timer reaches the second value it has expired.

Thus in some embodiments, a timer is started not in response to a message (e.g. from a serving cell) relating to handover or another mobility procedure, but instead in response to determining that the condition to trigger the mobility procedure has been met. In some examples, the timer is started upon at least partial completion of the mobility procedure, which may for example be triggered by the determining (e.g. in step 402).

In some examples, the method 400 may comprise receiving a configuration of the timer associated with the mobility procedure. That is, for example, the timer may be the timer that is used for that particular mobility procedure. The configuration may be received in some examples along with a configuration of the mobility procedure and/or configuration of the condition. In some examples, the configuration of the timer indicates an expiry value for the timer. That is, for example, the length of time or number of counts until the time reaches expiry following starting of the timer. In some examples, the method may comprise receiving a configuration (e.g. additional or second reconfiguration) for the timer (e.g. from the serving cell), for example following starting of the timer, where for example the mobility procedure and/or the condition is configured or reconfigured, and stopping the timer, for example in response to receiving the configuration of the timer. In some examples, the additional configuration is associated with the mobility procedure or a second mobility procedure (e.g. different to the first mobility procedure, and the second mobility procedure may have the same condition or a different condition, and may be in some examples in respect of the same target cell or a different target cell). The additional configuration may in some examples indicate an additional expiry value for the timer (which may be for the example the same as or different to the earlier expiry value for the mobility procedure) and/or an additional condition to trigger the mobility procedure (which may be for example the same as or different to the earlier condition for the mobility procedure).

In some examples, the condition is associated with a candidate target cell for the mobility procedure or a plurality of candidate target cells for the mobility procedure. That is, for example, the condition may be the same condition that is applied in respect of a single mobility procedure for a single target cell, or in respect of multiple target cells or candidate target cells. Thus, for example, the condition may be met when the signal strength of any one of multiple candidate target cells exceeds a threshold, or exceeds a signal strength of a serving cell by a threshold amount.

In some examples, determining that the condition has been met comprises monitoring a parameter. For example, the wireless device may monitor the parameter, for example by measuring signals received from one or more cells. Determining that the condition has been met may comprise determining that the parameter exceeds a threshold. The parameter may comprise a signal strength of at least one candidate target cell associated with the mobility procedure at the wireless device.

In some examples, the mobility procedure comprises a handover to a target cell or a resume procedure (e.g. an RRC Resume procedure) to a candidate target cell associated with the mobility procedure.

In some examples, the method 400 further comprises carrying out a RRC Reestablishment procedure and/or setting a status of the wireless device to RRC_IDLE upon determining the failure of the mobility procedure. This may for example therefore result in restored connectivity for the wireless device, for example to the serving cell.

In some examples, the method 400 comprises carrying out the mobility procedure when the condition has been met. The method may then further comprise aborting the mobility procedure in response to determining the failure of the mobility procedure.

Some examples comprise receiving a RRC Reconfiguration or RRC Connection Reconfiguration message with synchronization information. The RRC Reconfiguration or RRC Connection Reconfiguration message indicates the condition. The message may also configure the mobility procedure for the wireless device, such as for example by providing parameters and/or other information to enable the wireless device to connect to a target cell.

In some examples, starting the timer in response to the determining comprises at least one of the following actions: transmitting a random access preamble, synchronizing with a target cell of the conditional mobility procedure and/or submission of a RRC Reconfiguration Complete message. The method 400 may also comprise starting the timer, which may for example occur following or in response to the action(s). In other words, for example, the method 400 may comprise carrying out at least part of the conditional mobility procedure before starting the timer.

The timer may in some examples comprise a T304 timer. The method 400 may therefore comprise in some examples receiving a configuration of the T304 timer, wherein the configuration indicates an expiry value for the T304 timer.

The timer may in some examples comprise a T319 timer. The method 400 may therefore comprise receiving a configuration of the T319 timer, wherein the configuration indicates an expiry value for the T319 timer (e.g. in a RRC Resume message).

In some examples, the expiry value of the timer may be a fixed or predetermined value, and thus configuration of the timer may not occur.

In some examples, the method 400 comprises stopping the timer upon completion of the mobility procedure. Thus, for example, erroneous indication of failure of the mobility procedure due to expiry of the timer following successful completion of the mobility procedure can be avoided.

The condition may comprise whether a signal strength of a candidate target cell associated with the mobility procedure is greater than a signal strength of a serving cell of the wireless device by a first threshold, and/or whether the signal strength of the candidate target cell is greater than a signal strength threshold. The method 400 may then in some examples further comprise configuring the conditional mobility procedure and/or the timer in response to a signal strength of a candidate target cell being greater than the signal strength of a serving cell of the wireless device by a second threshold, wherein the second threshold is lower than the first threshold. This configuring may for example comprise or be in response to receiving a message associated with the mobility procedure from the serving cell, and thus the method then comprises configuring the mobility procedure.

In some examples, determining that the condition has been met comprises determining that an A3 event has been triggered. Thus in some examples existing mechanisms could be used to determine that the condition has been met. The wireless device may in some examples trigger the A3 event when a signal strength of a candidate target cell (e.g. determined as a result of measurements performed by the wireless device) is greater than a signal strength of a serving cell of the wireless device by a first threshold, and/or if the signal strength of a candidate target cell is greater than a signal strength threshold. The method 400 may in some examples also comprise receiving a message configuring the conditional mobility procedure and/or the timer when a signal strength of a candidate target cell is greater than the signal strength of a serving cell of the wireless device by a second threshold, wherein the second threshold is lower than the first threshold.

Particular additional examples will now be described.

Some examples of this disclosure provide a method performed by a wireless device or UE configured to perform a conditional mobility procedure (e.g. handover, resume etc), the method comprising:
- Step 1/ Receiving a failure timer configuration associated with a conditional mobility procedure;
   ∘ The conditional mobility procedure may consist of the UE receiving a message containing a condition for triggering a mobility procedure (e.g. handover, resume, conditional handover, etc.); The failure timer in Step 1/ is then associated to that message.
   ∘ The failure timer configuration may contain at least a timer value associated to a specified failure timer (e.g. specific to the particular mobility procedure and/or a particular candidate target cell);
   ∘ The condition may be associated to multiple cells and, for each cell potentially triggering the condition, there may be a respective failure timer configuration;
- Step 2/ Monitoring the condition for triggering a mobility procedure (e.g. handover, resume, conditional handover, etc.) which defines the handling of the failure timer;
- Step 3/ Start a failure timer with the configuration received in the failure timer (e.g. according to the configuration that may be received in step 1) upon the triggering of the condition that may be received in Step 1/ - that is, for example, starting the timer after determining that a condition to trigger a mobility procedure for the wireless device has been met;
   ∘ In the case each potential cell triggering the condition may be associated to a timer value, the timer is started with the configured value associated to the cell that has triggered the condition;
- Step 4/ Stop a failure timer described in the previous steps upon the total or partial completion of the conditional mobility procedure;
   ∘ That may be indicated by the completion of the random access procedure with the target cell that has triggered the condition;
- Step 5/ Upon the expiry of a failure timer described in the previous steps, consider the condition mobility procedure as failed, hence determining a failure of the mobility procedure, and in some examples perform specified actions trying to re-gain connectivity to the network;
   ∘ Possible actions to regain connectivity with the network may be one or more of:
   ▪ Start an RRC Reestablishment procedure;
   ▪ Go to RRC_IDLE (or any other sleeping state) and indicate a failure to upper layer, so that upper layers may trigger a subsequent action such as an IDLE to CONNECTED transition (e.g. a Registration Are Update).

### Examples defining a new timer

As discussed above, it is possible that the conditional mobility procedure is specified in 3GPP as a conditional handover. In that case, the UE may receive at least one message containing a reconfiguration with sync information, possibly received in an RRCReconfiguration message. That may either be associated to multiple cells or to a single cell.

In some examples, the failure timer configuration described in step 1/ above is a newly defined timer e.g. named T314 configuration, which consists at least of a timer (e.g. T314) value. The failure timer is then for example T314. The timer (e.g. T314) for conditional handover is started upon the fulfilment of the mobility condition (e.g. based on radio conditions of a given cell compared to the PCell and/or any SpCell). The exact timing may differ in different solutions implemented in the specifications e.g. the timer is started upon the fulfilment of the condition or upon the occurrence of any subsequent action after the fulfilment of the condition, such as upon the transmission of a random-access preamble, upon synchronizing with the target cell fulfilling the condition and where the UE attempts to connect, upon the submission to lower layers of the RRC Reconfiguration Complete message (or any other message equivalent to a handover complete command in the target cell), etc.

In some examples, the following changes to the 3GPP TS 38.331 V15.3.0 (2018-09) specifications may be defined. At least some changes are underlined.

```
 ReconfigurationWithSync ::= SEQUENCE {
    spCellConfigCommon ServingCellConfigCommon
    OPTIONAL, -- Need M
    newUE-Identity RNTI-Value,
    t304 ENUMERATED {ms50, ms100, ms150, ms200, ms500, ms1000,
    ms2000, ms10000},
    t314 ENUMERATED {ms50, ms100, ms150, ms200, ms500, ms1000,
    ms2000, ms10000},
        rach-ConfigDedicated CHOICE {
            uplink RACH-ConfigDedicated,
            supplementaryUplink RACH-ConfigDedicated
    }
    OPTIONAL, - Need N
    ..., [ [
    smtc SSB-MTC
    OPTIONAL - Need S
    ] ] }
```

### 7 Variables and constants

### 7.1 Timers

### 7.1.1 Timers (Informative)

| | | | |
|---|---|---|---|
| T304 | Upon reception of *RRCReconfiguration* message including *reconfigurationWithS ync* but without conditional mobility | Upon successful completion of random access on the corresponding SpCell | For T304 of MCG, in case of the handover from NR or intra-NR handover, initiate the RRC reestablishment procedure; In case of handover to NR, perform the actions defined in the specifications applicable for the source RAT. |
| | | For T304 of SCG, upon SCG release | |
| | | | For T304 of SCG, inform network about the reconfiguration with sync failure by initiating the SCG failure information procedure as specified in 5.7.3. |
| T314 | Upon the triggering condition of conditional mobility (e.g. conditional handover). | Upon successful completion of random access on the corresponding SpCell | For T314 of MCG, in case of the handover from NR or intra-NR handover, initiate the RRC reestablishment procedure; In case of handover to NR, perform the actions defined in the specifications applicable for the source RAT. |
| | | For T314 of SCG, upon SCG release. | |
| | | | For T314 of SCG, inform network about the reconfiguration with sync failure by initiating the SCG failure information procedure as specified in 5.7.3. |

### Examples related to T304 handling

As discussed previously, it is possible that the conditional mobility procedure is specified in 3GPP as the conditional handover. In that case, the UE may receive a message containing a reconfiguration with sync information, possibly received in an RRCReconfiguration message.

In some examples, the failure timer configuration is a timer T304 configuration, which consists at least of a timer T304 value. The failure timer itself is also T304, although a different instance with a different behaviour is defined in the case of a conditional handover compared to an ordinary handover. Differently from the existing timer T304 for handover, the timer T304 for conditional handover is started upon the fulfilment of the mobility condition (e.g. based on radio conditions of a given cell compared to the PCell and/or any SpCell). The exact timing may differ in different solutions implemented in the specifications e.g. the timer is started upon the fulfilment of the condition or upon the occurrence of any subsequent action after the fulfilment of the condition, such as upon the transmission of a random-access preamble, upon synchronizing with the target cell fulfilling the condition and where the UE attempts to connect, upon the submission to lower layers of the RRC Reconfiguration Complete message (or any other message equivalent to a handover complete command in the target cell), etc. The timer T304 may also be stopped in case the UE receives a configuration that overrides the conditional mobility.

The following changes to the 3GPP TS 38.331 V15.3.0 (2018-09) specifications may be defined, for example in the case of NR. At least some changes are underlined.

```
 ReconfigurationWithSync ::= SEQUENCE {
    spCellConfigCommon ServingCellConfigCommon
    OPTIONAL, -- Need M
    newUE-Identity RNTI-Value,
    t304 ENUMERATED {ms50, ms100, ms150, ms200, ms500, ms1000,
    ms2000, ms10000},
        rach-ConfigDedicated CHOICE {
            uplink RACH-ConfigDedicated,
            supplementaryUplink RACH-ConfigDedicated
    }
    OPTIONAL, - Need N
    [ [
    smtc SSB-MTC
    OPTIONAL - Need S
    ] ] }
```

### 7 Variables and constants

### 7.1 Timers

### 7.1.1 Timers (Informative)

| | | | |
|---|---|---|---|
| T304 | Upon reception of *RRCReconfiguratio* n message including *reconfigurationWith Sync* or upon the triggering condition of conditional mobility (e.g. conditional handover). | Upon successful completion of random access on the corresponding SpCell | For T304 of MCG, in case of the handover from NR or intra-NR handover, initiate the RRC reestablishment procedure; In case of handover to NR, perform the actions defined in the specifications applicable for the source RAT. |
| | | For T304 of SCG, upon SCG release | |
| | | | For T304 of SCG, inform network about the reconfiguration with sync failure by initiating the SCG failure information procedure as specified in 5.7.3. |

### Examples related to T319 handling

As discussed previously, it is possible that the conditional mobility is specified as the conditional RRC resume procedure, e.g. upon fulfilment of the condition the UE trigger an RRC resume procedure with the target cell associated with the triggering condition.

In that case, the UE may receive a message containing a reconfiguration with sync information, possibly received in an *RRCResume* message.

In one embodiment, the failure timer configuration is a timer T319 configuration, which consists at least of a timer T319 value. The failure timer itself is also T319, although a different instance with a different behaviour is defined in the case of a conditional handover using resume (or some form of conditional resume) compared to an ordinary resume procedure. Differently from the existing timer T319 for ordinary resume procedure for UEs in RRC_INACTIVE state, the timer T319 for conditional handover using resume is started upon the fulfilment of the mobility condition (e.g. based on radio conditions of a given cell compared to the PCell and/or any SpCell). The exact timing may differ in different solutions implemented in the specifications e.g. the timer is started upon the fulfilment of the condition or upon the occurrence of any subsequent action after the fulfilment of the condition, such as upon the transmission of a random-access preamble, upon synchronizing with the target cell fulfilling the condition and where the UE attempts to connect, upon the submission to lower layers of the RRC Resume Request message (or any other message equivalent to a handover complete command in the target cell), or upon the resume initiation procedure, etc.

An example of the T319 description as it would be have been described in TS 38.331 is shown below:

### 7.1.1 Timers (Informative)

| **Timer** | **Start** | **Stop** | **At expiry** |
|---|---|---|---|
| T319 | Upon transmission of *RRCResumeReque st or RRCResumeReque st1* (e.g. upon triggering conditional mobility). | Upon reception of *RRCResume, RRCSetup, RRCRelease, RRCRelease with suspendConfig* or *RRCReject* message, cell re-selection and upon abortion of connection establishment by upper layers. | Perform the actions as specified in 5.3.13.5. |

### Examples related to triggering condition of conditional mobility

As discussed previously, the timer(s) may be started when the triggering condition of conditional mobility procedure is fulfilled. There can be different ways to define that the triggering condition is fulfilled, according to one or more of the following:
- The triggering condition is fulfilled in the UE, but no notification from the UE is sent. The timers are started when the condition is fulfilled.
- The UE triggers an event when the triggering condition is fulfilled. The event could be the existing A3 event or a new event. When an event is triggered a *MeasurementReport* is sent according to existing behaviour.
- The UE sends a message other than *MeasurementReport* when the triggering condition is fulfilled. The message could be an existing RRC message or a new message or a lower layer notification.

### Examples related to configuration of conditional mobility

The network may configure a conditional mobility procedure when a certain event has been fulfilled in the UE. In legacy systems, for example, the A3 event is used to trigger handover and it can also be used in some examples to trigger conditional handover. The A3 event could be used both for triggering conditional handover and for triggering the fulfilment of the triggering condition for conditional handover. In such cases, two different thresholds may be connected to the A3 event. One threshold may be configured for the A3 event as in legacy systems (that threshold will trigger the configuration of conditional handover) and a new threshold may be configured in *RRCReconfiguration* message including *reconfigurationWithSync* as part of the configuration of conditional handover.

Alternatively, a new event could be defined to trigger a conditional mobility procedure, i.e. there are two different events which trigger configuration of conditional handover and which trigger the fulfilment of the triggering condition. See also the embodiments related to triggering condition of conditional mobility procedure.

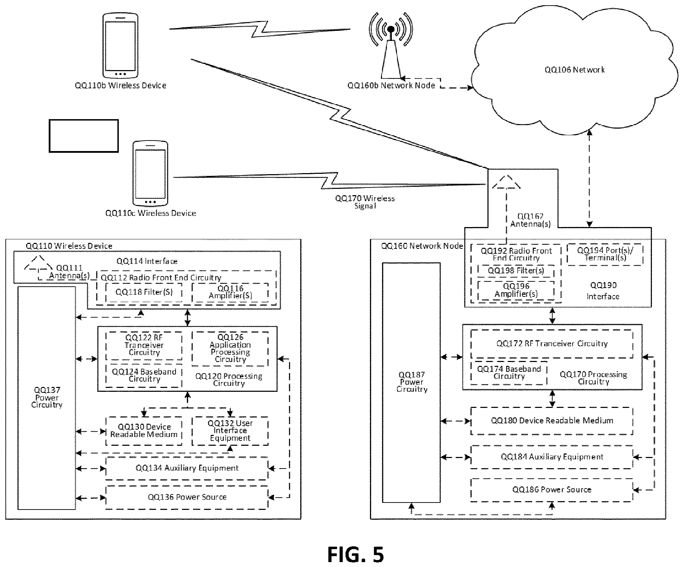

Although the subject matter described herein may be implemented in any appropriate type of system using any suitable components, the embodiments disclosed herein are described in relation to a wireless network, such as the example wireless network illustrated in Figure 5. For simplicity, the wireless network of Figure 5 only depicts network QQ106, network nodes QQ160 and QQ160b, and WDs QQ110, QQ110b, and QQ110c. In practice, a wireless network may further include any additional elements suitable to support communication between wireless devices or between a wireless device and another communication device, such as a landline telephone, a service provider, or any other network node or end device. Of the illustrated components, network node QQ160 and wireless device (WD) QQ110 are depicted with additional detail. The wireless network may provide communication and other types of services to one or more wireless devices to facilitate the wireless devices' access to and/or use of the services provided by, or via, the wireless network.

The wireless network may comprise and/or interface with any type of communication, telecommunication, data, cellular, and/or radio network or other similar type of system. In some embodiments, the wireless network may be configured to operate according to specific standards or other types of predefined rules or procedures. Thus, particular embodiments of the wireless network may implement communication standards, such as Global System for Mobile Communications (GSM), Universal Mobile Telecommunications System (UMTS), Long Term Evolution (LTE), and/or other suitable 2G, 3G, 4G, or 5G standards; wireless local area network (WLAN) standards, such as the IEEE 802.11 standards; and/or any other appropriate wireless communication standard, such as the Worldwide Interoperability for Microwave Access (WiMax), Bluetooth, Z-Wave and/or ZigBee standards.

Network QQ106 may comprise one or more backhaul networks, core networks, IP networks, public switched telephone networks (PSTNs), packet data networks, optical networks, wide-area networks (WANs), local area networks (LANs), wireless local area networks (WLANs), wired networks, wireless networks, metropolitan area networks, and other networks to enable communication between devices.

Network node QQ160 and WD QQ110 comprise various components described in more detail below. These components work together in order to provide network node and/or wireless device functionality, such as providing wireless connections in a wireless network. In different embodiments, the wireless network may comprise any number of wired or wireless networks, network nodes, base stations, controllers, wireless devices, relay stations, and/or any other components or systems that may facilitate or participate in the communication of data and/or signals whether via wired or wireless connections.

As used herein, network node refers to equipment capable, configured, arranged and/or operable to communicate directly or indirectly with a wireless device and/or with other network nodes or equipment in the wireless network to enable and/or provide wireless access to the wireless device and/or to perform other functions (e.g., administration) in the wireless network. Examples of network nodes include, but are not limited to, access points (APs) (e.g., radio access points), base stations (BSs) (e.g., radio base stations, Node Bs, evolved Node Bs (eNBs) and NR NodeBs (gNBs)). Base stations may be categorized based on the amount of coverage they provide (or, stated differently, their transmit power level) and may then also be referred to as femto base stations, pico base stations, micro base stations, or macro base stations. A base station may be a relay node or a relay donor node controlling a relay. A network node may also include one or more (or all) parts of a distributed radio base station such as centralized digital units and/or remote radio units (RRUs), sometimes referred to as Remote Radio Heads (RRHs). Such remote radio units may or may not be integrated with an antenna as an antenna integrated radio. Parts of a distributed radio base station may also be referred to as nodes in a distributed antenna system (DAS). Yet further examples of network nodes include multi-standard radio (MSR) equipment such as MSR BSs, network controllers such as radio network controllers (RNCs) or base station controllers (BSCs), base transceiver stations (BTSs), transmission points, transmission nodes, multi-cell/multicast coordination entities (MCEs), core network nodes (e.g., MSCs, MMEs), O&M nodes, OSS nodes, SON nodes, positioning nodes (e.g., E-SMLCs), and/or MDTs. As another example, a network node may be a virtual network node as described in more detail below. More generally, however, network nodes may represent any suitable device (or group of devices) capable, configured, arranged, and/or operable to enable and/or provide a wireless device with access to the wireless network or to provide some service to a wireless device that has accessed the wireless network.

In Figure 5, network node QQ160 includes processing circuitry QQ170, device readable medium QQ180, interface QQ190, auxiliary equipment QQ184, power source QQ186, power circuitry QQ187, and antenna QQ162. Although network node QQ160 illustrated in the example wireless network of Figure 5 may represent a device that includes the illustrated combination of hardware components, other embodiments may comprise network nodes with different combinations of components. It is to be understood that a network node comprises any suitable combination of hardware and/or software needed to perform the tasks, features, functions and methods disclosed herein. Moreover, while the components of network node QQ160 are depicted as single boxes located within a larger box, or nested within multiple boxes, in practice, a network node may comprise multiple different physical components that make up a single illustrated component (e.g., device readable medium QQ180 may comprise multiple separate hard drives as well as multiple RAM modules).

Similarly, network node QQ160 may be composed of multiple physically separate components (e.g., a NodeB component and a RNC component, or a BTS component and a BSC component, etc.), which may each have their own respective components. In certain scenarios in which network node QQ160 comprises multiple separate components (e.g., BTS and BSC components), one or more of the separate components may be shared among several network nodes. For example, a single RNC may control multiple NodeB's. In such a scenario, each unique NodeB and RNC pair, may in some instances be considered a single separate network node. In some embodiments, network node QQ160 may be configured to support multiple radio access technologies (RATs). In such embodiments, some components may be duplicated (e.g., separate device readable medium QQ180 for the different RATs) and some components may be reused (e.g., the same antenna QQ162 may be shared by the RATs). Network node QQ160 may also include multiple sets of the various illustrated components for different wireless technologies integrated into network node QQ160, such as, for example, GSM, WCDMA, LTE, NR, WiFi, or Bluetooth wireless technologies. These wireless technologies may be integrated into the same or different chip or set of chips and other components within network node QQ160.

Processing circuitry QQ170 is configured to perform any determining, calculating, or similar operations (e.g., certain obtaining operations) described herein as being provided by a network node. These operations performed by processing circuitry QQ170 may include processing information obtained by processing circuitry QQ170 by, for example, converting the obtained information into other information, comparing the obtained information or converted information to information stored in the network node, and/or performing one or more operations based on the obtained information or converted information, and as a result of said processing making a determination.

Processing circuitry QQ170 may comprise a combination of one or more of a microprocessor, controller, microcontroller, central processing unit, digital signal processor, application-specific integrated circuit, field programmable gate array, or any other suitable computing device, resource, or combination of hardware, software and/or encoded logic operable to provide, either alone or in conjunction with other network node QQ160 components, such as device readable medium QQ180, network node QQ160 functionality. For example, processing circuitry QQ170 may execute instructions stored in device readable medium QQ180 or in memory within processing circuitry QQ170. Such functionality may include providing any of the various wireless features, functions, or benefits discussed herein. In some embodiments, processing circuitry QQ170 may include a system on a chip (SOC).

In some embodiments, processing circuitry QQ170 may include one or more of radio frequency (RF) transceiver circuitry QQ172 and baseband processing circuitry QQ174. In some embodiments, radio frequency (RF) transceiver circuitry QQ172 and baseband processing circuitry QQ174 may be on separate chips (or sets of chips), boards, or units, such as radio units and digital units. In alternative embodiments, part or all of RF transceiver circuitry QQ172 and baseband processing circuitry QQ174 may be on the same chip or set of chips, boards, or units

In certain embodiments, some or all of the functionality described herein as being provided by a network node, base station, eNB or other such network device may be performed by processing circuitry QQ170 executing instructions stored on device readable medium QQ180 or memory within processing circuitry QQ170. In alternative embodiments, some or all of the functionality may be provided by processing circuitry QQ170 without executing instructions stored on a separate or discrete device readable medium, such as in a hard-wired manner. In any of those embodiments, whether executing instructions stored on a device readable storage medium or not, processing circuitry QQ170 can be configured to perform the described functionality. The benefits provided by such functionality are not limited to processing circuitry QQ170 alone or to other components of network node QQ160, but are enjoyed by network node QQ160 as a whole, and/or by end users and the wireless network generally.

Device readable medium QQ180 may comprise any form of volatile or non-volatile computer readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device readable and/or computer-executable memory devices that store information, data, and/or instructions that may be used by processing circuitry QQ170. Device readable medium QQ180 may store any suitable instructions, data or information, including a computer program, software, an application including one or more of logic, rules, code, tables, etc. and/or other instructions capable of being executed by processing circuitry QQ170 and, utilized by network node QQ160. Device readable medium QQ180 may be used to store any calculations made by processing circuitry QQ170 and/or any data received via interface QQ190. In some embodiments, processing circuitry QQ170 and device readable medium QQ180 may be considered to be integrated.

Interface QQ190 is used in the wired or wireless communication of signalling and/or data between network node QQ160, network QQ106, and/or WDs QQ110. As illustrated, interface QQ190 comprises port(s)/terminal(s) QQ194 to send and receive data, for example to and from network QQ106 over a wired connection. Interface QQ190 also includes radio front end circuitry QQ192 that may be coupled to, or in certain embodiments a part of, antenna QQ162. Radio front end circuitry QQ192 comprises filters QQ198 and amplifiers QQ196. Radio front end circuitry QQ192 may be connected to antenna QQ162 and processing circuitry QQ170. Radio front end circuitry may be configured to condition signals communicated between antenna QQ162 and processing circuitry QQ170. Radio front end circuitry QQ192 may receive digital data that is to be sent out to other network nodes or WDs via a wireless connection. Radio front end circuitry QQ192 may convert the digital data into a radio signal having the appropriate channel and bandwidth parameters using a combination of filters QQ198 and/or amplifiers QQ196. The radio signal may then be transmitted via antenna QQ162. Similarly, when receiving data, antenna QQ162 may collect radio signals which are then converted into digital data by radio front end circuitry QQ192. The digital data may be passed to processing circuitry QQ170. In other embodiments, the interface may comprise different components and/or different combinations of components.

In certain alternative embodiments, network node QQ160 may not include separate radio front end circuitry QQ192, instead, processing circuitry QQ170 may comprise radio front end circuitry and may be connected to antenna QQ162 without separate radio front end circuitry QQ192. Similarly, in some embodiments, all or some of RF transceiver circuitry QQ172 may be considered a part of interface QQ190. In still other embodiments, interface QQ190 may include one or more ports or terminals QQ194, radio front end circuitry QQ192, and RF transceiver circuitry QQ172, as part of a radio unit (not shown), and interface QQ190 may communicate with baseband processing circuitry QQ174, which is part of a digital unit (not shown).

Antenna QQ162 may include one or more antennas, or antenna arrays, configured to send and/or receive wireless signals. Antenna QQ162 may be coupled to radio front end circuitry QQ190 and may be any type of antenna capable of transmitting and receiving data and/or signals wirelessly. In some embodiments, antenna QQ162 may comprise one or more omni-directional, sector or panel antennas operable to transmit/receive radio signals between, for example, 2 GHz and 66 GHz. An omni-directional antenna may be used to transmit/receive radio signals in any direction, a sector antenna may be used to transmit/receive radio signals from devices within a particular area, and a panel antenna may be a line of sight antenna used to transmit/receive radio signals in a relatively straight line. In some instances, the use of more than one antenna may be referred to as MIMO. In certain embodiments, antenna QQ162 may be separate from network node QQ160 and may be connectable to network node QQ160 through an interface or port.

Antenna QQ162, interface QQ190, and/or processing circuitry QQ170 may be configured to perform any receiving operations and/or certain obtaining operations described herein as being performed by a network node. Any information, data and/or signals may be received from a wireless device, another network node and/or any other network equipment. Similarly, antenna QQ162, interface QQ190, and/or processing circuitry QQ170 may be configured to perform any transmitting operations described herein as being performed by a network node. Any information, data and/or signals may be transmitted to a wireless device, another network node and/or any other network equipment.

Power circuitry QQ187 may comprise, or be coupled to, power management circuitry and is configured to supply the components of network node QQ160 with power for performing the functionality described herein. Power circuitry QQ187 may receive power from power source QQ186. Power source QQ186 and/or power circuitry QQ187 may be configured to provide power to the various components of network node QQ160 in a form suitable for the respective components (e.g., at a voltage and current level needed for each respective component). Power source QQ186 may either be included in, or external to, power circuitry QQ187 and/or network node QQ160. For example, network node QQ160 may be connectable to an external power source (e.g., an electricity outlet) via an input circuitry or interface such as an electrical cable, whereby the external power source supplies power to power circuitry QQ187. As a further example, power source QQ186 may comprise a source of power in the form of a battery or battery pack which is connected to, or integrated in, power circuitry QQ187. The battery may provide backup power should the external power source fail. Other types of power sources, such as photovoltaic devices, may also be used.

Alternative embodiments of network node QQ160 may include additional components beyond those shown in Figure 5 that may be responsible for providing certain aspects of the network node's functionality, including any of the functionality described herein and/or any functionality necessary to support the subject matter described herein. For example, network node QQ160 may include user interface equipment to allow input of information into network node QQ160 and to allow output of information from network node QQ160. This may allow a user to perform diagnostic, maintenance, repair, and other administrative functions for network node QQ160.

As used herein, wireless device (WD) refers to a device capable, configured, arranged and/or operable to communicate wirelessly with network nodes and/or other wireless devices. Unless otherwise noted, the term WD may be used interchangeably herein with user equipment (UE). Communicating wirelessly may involve transmitting and/or receiving wireless signals using electromagnetic waves, radio waves, infrared waves, and/or other types of signals suitable for conveying information through air. In some embodiments, a WD may be configured to transmit and/or receive information without direct human interaction. For instance, a WD may be designed to transmit information to a network on a predetermined schedule, when triggered by an internal or external event, or in response to requests from the network. Examples of a WD include, but are not limited to, a smart phone, a mobile phone, a cell phone, a voice over IP (VoIP) phone, a wireless local loop phone, a desktop computer, a personal digital assistant (PDA), a wireless cameras, a gaming console or device, a music storage device, a playback appliance, a wearable terminal device, a wireless endpoint, a mobile station, a tablet, a laptop, a laptop-embedded equipment (LEE), a laptop-mounted equipment (LME), a smart device, a wireless customer-premise equipment (CPE). a vehicle-mounted wireless terminal device, etc. A WD may support device-to-device (D2D) communication, for example by implementing a 3GPP standard for sidelink communication, vehicle-to-vehicle (V2V), vehicle-to-infrastructure (V2I), vehicle-to-everything (V2X) and may in this case be referred to as a D2D communication device. As yet another specific example, in an Internet of Things (loT) scenario, a WD may represent a machine or other device that performs monitoring and/or measurements, and transmits the results of such monitoring and/or measurements to another WD and/or a network node. The WD may in this case be a machine-to-machine (M2M) device, which may in a 3GPP context be referred to as an MTC device. As one particular example, the WD may be a UE implementing the 3GPP narrow band internet of things (NB-loT) standard. Particular examples of such machines or devices are sensors, metering devices such as power meters, industrial machinery, or home or personal appliances (e.g. refrigerators, televisions, etc.) personal wearables (e.g., watches, fitness trackers, etc.). In other scenarios, a WD may represent a vehicle or other equipment that is capable of monitoring and/or reporting on its operational status or other functions associated with its operation. A WD as described above may represent the endpoint of a wireless connection, in which case the device may be referred to as a wireless terminal. Furthermore, a WD as described above may be mobile, in which case it may also be referred to as a mobile device or a mobile terminal.

As illustrated, wireless device QQ110 includes antenna QQ111, interface QQ114, processing circuitry QQ120, device readable medium QQ130, user interface equipment QQ132, auxiliary equipment QQ134, power source QQ136 and power circuitry QQ137. WD QQ110 may include multiple sets of one or more of the illustrated components for different wireless technologies supported by WD QQ110, such as, for example, GSM, WCDMA, LTE, NR, WiFi, WiMAX, or Bluetooth wireless technologies, just to mention a few. These wireless technologies may be integrated into the same or different chips or set of chips as other components within WD QQ110.

Antenna QQ111 may include one or more antennas or antenna arrays, configured to send and/or receive wireless signals, and is connected to interface QQ114. In certain alternative embodiments, antenna QQ111 may be separate from WD QQ110 and be connectable to WD QQ110 through an interface or port. Antenna QQ111, interface QQ114, and/or processing circuitry QQ120 may be configured to perform any receiving or transmitting operations described herein as being performed by a WD. Any information, data and/or signals may be received from a network node and/or another WD. In some embodiments, radio front end circuitry and/or antenna QQ111 may be considered an interface.

As illustrated, interface QQ114 comprises radio front end circuitry QQ112 and antenna QQ111. Radio front end circuitry QQ112 comprise one or more filters QQ118 and amplifiers QQ116. Radio front end circuitry QQ114 is connected to antenna QQ111 and processing circuitry QQ120, and is configured to condition signals communicated between antenna QQ111 and processing circuitry QQ120. Radio front end circuitry QQ112 may be coupled to or a part of antenna QQ111. In some embodiments, WD QQ110 may not include separate radio front end circuitry QQ112; rather, processing circuitry QQ120 may comprise radio front end circuitry and may be connected to antenna QQ111. Similarly, in some embodiments, some or all of RF transceiver circuitry QQ122 may be considered a part of interface QQ114. Radio front end circuitry QQ112 may receive digital data that is to be sent out to other network nodes or WDs via a wireless connection. Radio front end circuitry QQ112 may convert the digital data into a radio signal having the appropriate channel and bandwidth parameters using a combination of filters QQ118 and/or amplifiers QQ116. The radio signal may then be transmitted via antenna QQ111. Similarly, when receiving data, antenna QQ111 may collect radio signals which are then converted into digital data by radio front end circuitry QQ112. The digital data may be passed to processing circuitry QQ120. In other embodiments, the interface may comprise different components and/or different combinations of components.

Processing circuitry QQ120 may comprise a combination of one or more of a microprocessor, controller, microcontroller, central processing unit, digital signal processor, application-specific integrated circuit, field programmable gate array, or any other suitable computing device, resource, or combination of hardware, software, and/or encoded logic operable to provide, either alone or in conjunction with other WD QQ110 components, such as device readable medium QQ130, WD QQ110 functionality. Such functionality may include providing any of the various wireless features or benefits discussed herein. For example, processing circuitry QQ120 may execute instructions stored in device readable medium QQ130 or in memory within processing circuitry QQ120 to provide the functionality disclosed herein.

As illustrated, processing circuitry QQ120 includes one or more of RF transceiver circuitry QQ122, baseband processing circuitry QQ124, and application processing circuitry QQ126. In other embodiments, the processing circuitry may comprise different components and/or different combinations of components. In certain embodiments processing circuitry QQ120 of WD QQ110 may comprise a SOC. In some embodiments, RF transceiver circuitry QQ122, baseband processing circuitry QQ124, and application processing circuitry QQ126 may be on separate chips or sets of chips. In alternative embodiments, part or all of baseband processing circuitry QQ124 and application processing circuitry QQ126 may be combined into one chip or set of chips, and RF transceiver circuitry QQ122 may be on a separate chip or set of chips. In still alternative embodiments, part or all of RF transceiver circuitry QQ122 and baseband processing circuitry QQ124 may be on the same chip or set of chips, and application processing circuitry QQ126 may be on a separate chip or set of chips. In yet other alternative embodiments, part or all of RF transceiver circuitry QQ122, baseband processing circuitry QQ124, and application processing circuitry QQ126 may be combined in the same chip or set of chips. In some embodiments, RF transceiver circuitry QQ122 may be a part of interface QQ114. RF transceiver circuitry QQ122 may condition RF signals for processing circuitry QQ120.

In certain embodiments, some or all of the functionality described herein as being performed by a WD may be provided by processing circuitry QQ120 executing instructions stored on device readable medium QQ130, which in certain embodiments may be a computer-readable storage medium. In alternative embodiments, some or all of the functionality may be provided by processing circuitry QQ120 without executing instructions stored on a separate or discrete device readable storage medium, such as in a hard-wired manner. In any of those particular embodiments, whether executing instructions stored on a device readable storage medium or not, processing circuitry QQ120 can be configured to perform the described functionality. The benefits provided by such functionality are not limited to processing circuitry QQ120 alone or to other components of WD QQ110, but are enjoyed by WD QQ110 as a whole, and/or by end users and the wireless network generally.

Processing circuitry QQ120 may be configured to perform any determining, calculating, or similar operations (e.g., certain obtaining operations) described herein as being performed by a WD. These operations, as performed by processing circuitry QQ120, may include processing information obtained by processing circuitry QQ120 by, for example, converting the obtained information into other information, comparing the obtained information or converted information to information stored by WD QQ110, and/or performing one or more operations based on the obtained information or converted information, and as a result of said processing making a determination.

Device readable medium QQ130 may be operable to store a computer program, software, an application including one or more of logic, rules, code, tables, etc. and/or other instructions capable of being executed by processing circuitry QQ120. Device readable medium QQ130 may include computer memory (e.g., Random Access Memory (RAM) or Read Only Memory (ROM)), mass storage media (e.g., a hard disk), removable storage media (e.g., a Compact Disk (CD) or a Digital Video Disk (DVD)), and/or any other volatile or non-volatile, non-transitory device readable and/or computer executable memory devices that store information, data, and/or instructions that may be used by processing circuitry QQ120. In some embodiments, processing circuitry QQ120 and device readable medium QQ130 may be considered to be integrated.

User interface equipment QQ132 may provide components that allow for a human user to interact with WD QQ110. Such interaction may be of many forms, such as visual, audial, tactile, etc. User interface equipment QQ132 may be operable to produce output to the user and to allow the user to provide input to WD QQ110. The type of interaction may vary depending on the type of user interface equipment QQ132 installed in WD QQ110. For example, if WD QQ110 is a smart phone, the interaction may be via a touch screen; if WD QQ110 is a smart meter, the interaction may be through a screen that provides usage (e.g., the number of gallons used) or a speaker that provides an audible alert (e.g., if smoke is detected). User interface equipment QQ132 may include input interfaces, devices and circuits, and output interfaces, devices and circuits. User interface equipment QQ132 is configured to allow input of information into WD QQ110, and is connected to processing circuitry QQ120 to allow processing circuitry QQ120 to process the input information. User interface equipment QQ132 may include, for example, a microphone, a proximity or other sensor, keys/buttons, a touch display, one or more cameras, a USB port, or other input circuitry. User interface equipment QQ132 is also configured to allow output of information from WD QQ110, and to allow processing circuitry QQ120 to output information from WD QQ110. User interface equipment QQ132 may include, for example, a speaker, a display, vibrating circuitry, a USB port, a headphone interface, or other output circuitry. Using one or more input and output interfaces, devices, and circuits, of user interface equipment QQ132, WD QQ110 may communicate with end users and/or the wireless network, and allow them to benefit from the functionality described herein.

Auxiliary equipment QQ134 is operable to provide more specific functionality which may not be generally performed by WDs. This may comprise specialized sensors for doing measurements for various purposes, interfaces for additional types of communication such as wired communications etc. The inclusion and type of components of auxiliary equipment QQ134 may vary depending on the embodiment and/or scenario.

Power source QQ136 may, in some embodiments, be in the form of a battery or battery pack. Other types of power sources, such as an external power source (e.g., an electricity outlet), photovoltaic devices or power cells, may also be used. WD QQ110 may further comprise power circuitry QQ137 for delivering power from power source QQ136 to the various parts of WD QQ110 which need power from power source QQ136 to carry out any functionality described or indicated herein. Power circuitry QQ137 may in certain embodiments comprise power management circuitry. Power circuitry QQ137 may additionally or alternatively be operable to receive power from an external power source; in which case WD QQ110 may be connectable to the external power source (such as an electricity outlet) via input circuitry or an interface such as an electrical power cable. Power circuitry QQ137 may also in certain embodiments be operable to deliver power from an external power source to power source QQ136. This may be, for example, for the charging of power source QQ136. Power circuitry QQ137 may perform any formatting, converting, or other modification to the power from power source QQ136 to make the power suitable for the respective components of WD QQ110 to which power is supplied.

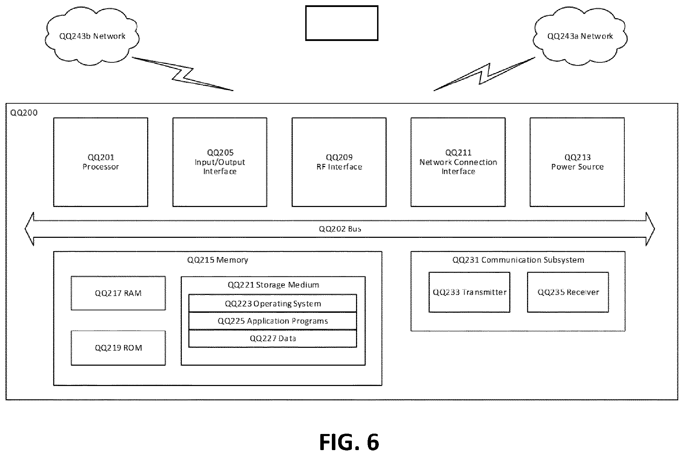

Figure 6 illustrates one embodiment of a UE in accordance with various aspects described herein. As used herein, a user equipment or UE may not necessarily have a user in the sense of a human user who owns and/or operates the relevant device. Instead, a UE may represent a device that is intended for sale to, or operation by, a human user but which may not, or which may not initially, be associated with a specific human user (e.g., a smart sprinkler controller). Alternatively, a UE may represent a device that is not intended for sale to, or operation by, an end user but which may be associated with or operated for the benefit of a user (e.g., a smart power meter). UE QQ200 may be any UE identified by the 3^{rd} Generation Partnership Project (3GPP), including a NB-loT UE, a machine type communication (MTC) UE, and/or an enhanced MTC (eMTC) UE. UE QQ200, as illustrated in Figure 6, is one example of a WD configured for communication in accordance with one or more communication standards promulgated by the 3^{rd} Generation Partnership Project (3GPP), such as 3GPP's GSM, UMTS, LTE, and/or 5G standards. As mentioned previously, the term WD and UE may be used interchangeable. Accordingly, although Figure 6 is a UE, the components discussed herein are equally applicable to a WD, and vice-versa.

In Figure 6, UE QQ200 includes processing circuitry QQ201 that is operatively coupled to input/output interface QQ205, radio frequency (RF) interface QQ209, network connection interface QQ211, memory QQ215 including random access memory (RAM) QQ217, read-only memory (ROM) QQ219, and storage medium QQ221 or the like, communication subsystem QQ231, power source QQ233, and/or any other component, or any combination thereof. Storage medium QQ221 includes operating system QQ223, application program QQ225, and data QQ227. In other embodiments, storage medium QQ221 may include other similar types of information. Certain UEs may utilize all of the components shown in Figure 6, or only a subset of the components. The level of integration between the components may vary from one UE to another UE. Further, certain UEs may contain multiple instances of a component, such as multiple processors, memories, transceivers, transmitters, receivers, etc.

In Figure 6, processing circuitry QQ201 may be configured to process computer instructions and data. Processing circuitry QQ201 may be configured to implement any sequential state machine operative to execute machine instructions stored as machinereadable computer programs in the memory, such as one or more hardware-implemented state machines (e.g., in discrete logic, FPGA, ASIC, etc.); programmable logic together with appropriate firmware; one or more stored program, general-purpose processors, such as a microprocessor or Digital Signal Processor (DSP), together with appropriate software; or any combination of the above. For example, the processing circuitry QQ201 may include two central processing units (CPUs). Data may be information in a form suitable for use by a computer.

In the depicted embodiment, input/output interface QQ205 may be configured to provide a communication interface to an input device, output device, or input and output device. UE QQ200 may be configured to use an output device via input/output interface QQ205. An output device may use the same type of interface port as an input device. For example, a USB port may be used to provide input to and output from UE QQ200. The output device may be a speaker, a sound card, a video card, a display, a monitor, a printer, an actuator, an emitter, a smartcard, another output device, or any combination thereof. UE QQ200 may be configured to use an input device via input/output interface QQ205 to allow a user to capture information into UE QQ200. The input device may include a touch-sensitive or presence-sensitive display, a camera (e.g., a digital camera, a digital video camera, a web camera, etc.), a microphone, a sensor, a mouse, a trackball, a directional pad, a trackpad, a scroll wheel, a smartcard, and the like. The presence-sensitive display may include a capacitive or resistive touch sensor to sense input from a user. A sensor may be, for instance, an accelerometer, a gyroscope, a tilt sensor, a force sensor, a magnetometer, an optical sensor, a proximity sensor, another like sensor, or any combination thereof. For example, the input device may be an accelerometer, a magnetometer, a digital camera, a microphone, and an optical sensor.

In Figure 6, RF interface QQ209 may be configured to provide a communication interface to RF components such as a transmitter, a receiver, and an antenna. Network connection interface QQ211 may be configured to provide a communication interface to network QQ243a. Network QQ243a may encompass wired and/or wireless networks such as a local-area network (LAN), a wide-area network (WAN), a computer network, a wireless network, a telecommunications network, another like network or any combination thereof. For example, network QQ243a may comprise a Wi-Fi network. Network connection interface QQ211 may be configured to include a receiver and a transmitter interface used to communicate with one or more other devices over a communication network according to one or more communication protocols, such as Ethernet, TCP/IP, SONET, ATM, or the like. Network connection interface QQ211 may implement receiver and transmitter functionality appropriate to the communication network links (e.g., optical, electrical, and the like). The transmitter and receiver functions may share circuit components, software or firmware, or alternatively may be implemented separately.

RAM QQ217 may be configured to interface via bus QQ202 to processing circuitry QQ201 to provide storage or caching of data or computer instructions during the execution of software programs such as the operating system, application programs, and device drivers. ROM QQ219 may be configured to provide computer instructions or data to processing circuitry QQ201. For example, ROM QQ219 may be configured to store invariant low-level system code or data for basic system functions such as basic input and output (I/O), startup, or reception of keystrokes from a keyboard that are stored in a non-volatile memory. Storage medium QQ221 may be configured to include memory such as RAM, ROM, programmable read-only memory (PROM), erasable programmable read-only memory (EPROM), electrically erasable programmable read-only memory (EEPROM), magnetic disks, optical disks, floppy disks, hard disks, removable cartridges, or flash drives. In one example, storage medium QQ221 may be configured to include operating system QQ223, application program QQ225 such as a web browser application, a widget or gadget engine or another application, and data file QQ227. Storage medium QQ221 may store, for use by UE QQ200, any of a variety of various operating systems or combinations of operating systems.

Storage medium QQ221 may be configured to include a number of physical drive units, such as redundant array of independent disks (RAID), floppy disk drive, flash memory, USB flash drive, external hard disk drive, thumb drive, pen drive, key drive, high-density digital versatile disc (HD-DVD) optical disc drive, internal hard disk drive, Blu-Ray optical disc drive, holographic digital data storage (HDDS) optical disc drive, external mini-dual inline memory module (DIMM), synchronous dynamic random access memory (SDRAM), external micro-DIMM SDRAM, smartcard memory such as a subscriber identity module or a removable user identity (SIM/RUIM) module, other memory, or any combination thereof. Storage medium QQ221 may allow UE QQ200 to access computer-executable instructions, application programs or the like, stored on transitory or non-transitory memory media, to offload data, or to upload data. An article of manufacture, such as one utilizing a communication system may be tangibly embodied in storage medium QQ221, which may comprise a device readable medium.

In Figure 6, processing circuitry QQ201 may be configured to communicate with network QQ243b using communication subsystem QQ231. Network QQ243a and network QQ243b may be the same network or networks or different network or networks. Communication subsystem QQ231 may be configured to include one or more transceivers used to communicate with network QQ243b. For example, communication subsystem QQ231 may be configured to include one or more transceivers used to communicate with one or more remote transceivers of another device capable of wireless communication such as another WD, UE, or base station of a radio access network (RAN) according to one or more communication protocols, such as IEEE 802.11, CDMA, WCDMA, GSM, LTE, UTRAN, WiMax, or the like. Each transceiver may include transmitter QQ233 and/or receiver QQ235 to implement transmitter or receiver functionality, respectively, appropriate to the RAN links (e.g., frequency allocations and the like). Further, transmitter QQ233 and receiver QQ235 of each transceiver may share circuit components, software or firmware, or alternatively may be implemented separately.

In the illustrated embodiment, the communication functions of communication subsystem QQ231 may include data communication, voice communication, multimedia communication, short-range communications such as Bluetooth, near-field communication, location-based communication such as the use of the global positioning system (GPS) to determine a location, another like communication function, or any combination thereof. For example, communication subsystem QQ231 may include cellular communication, Wi-Fi communication, Bluetooth communication, and GPS communication. Network QQ243b may encompass wired and/or wireless networks such as a local-area network (LAN), a wide-area network (WAN), a computer network, a wireless network, a telecommunications network, another like network or any combination thereof. For example, network QQ243b may be a cellular network, a Wi-Fi network, and/or a near-field network. Power source QQ213 may be configured to provide alternating current (AC) or direct current (DC) power to components of UE QQ200.

The features, benefits and/or functions described herein may be implemented in one of the components of UE QQ200 or partitioned across multiple components of UE QQ200. Further, the features, benefits, and/or functions described herein may be implemented in any combination of hardware, software or firmware. In one example, communication subsystem QQ231 may be configured to include any of the components described herein. Further, processing circuitry QQ201 may be configured to communicate with any of such components over bus QQ202. In another example, any of such components may be represented by program instructions stored in memory that when executed by processing circuitry QQ201 perform the corresponding functions described herein. In another example, the functionality of any of such components may be partitioned between processing circuitry QQ201 and communication subsystem QQ231. In another example, the non-computationally intensive functions of any of such components may be implemented in software or firmware and the computationally intensive functions may be implemented in hardware.

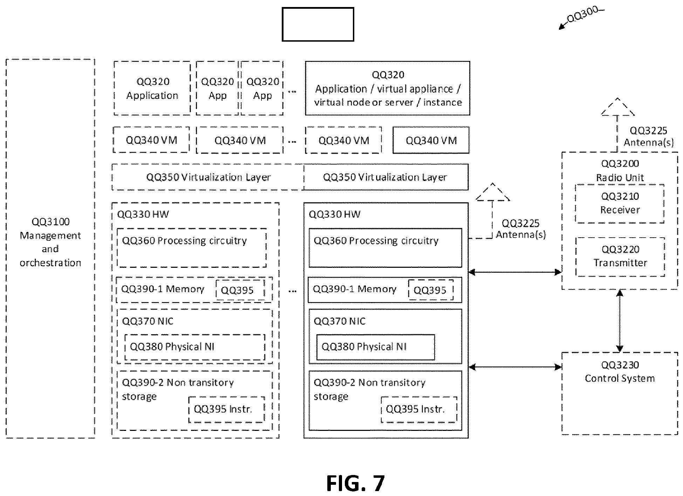

Figure 7 is a schematic block diagram illustrating a virtualization environment QQ300 in which functions implemented by some embodiments may be virtualized. In the present context, virtualizing means creating virtual versions of apparatuses or devices which may include virtualizing hardware platforms, storage devices and networking resources. As used herein, virtualization can be applied to a node (e.g., a virtualized base station or a virtualized radio access node) or to a device (e.g., a UE, a wireless device or any other type of communication device) or components thereof and relates to an implementation in which at least a portion of the functionality is implemented as one or more virtual components (e.g., via one or more applications, components, functions, virtual machines or containers executing on one or more physical processing nodes in one or more networks).

In some embodiments, some or all of the functions described herein may be implemented as virtual components executed by one or more virtual machines implemented in one or more virtual environments QQ300 hosted by one or more of hardware nodes QQ330. Further, in embodiments in which the virtual node is not a radio access node or does not require radio connectivity (e.g., a core network node), then the network node may be entirely virtualized.

The functions may be implemented by one or more applications QQ320 (which may alternatively be called software instances, virtual appliances, network functions, virtual nodes, virtual network functions, etc.) operative to implement some of the features, functions, and/or benefits of some of the embodiments disclosed herein. Applications QQ320 are run in virtualization environment QQ300 which provides hardware QQ330 comprising processing circuitry QQ360 and memory QQ390. Memory QQ390 contains instructions QQ395 executable by processing circuitry QQ360 whereby application QQ320 is operative to provide one or more of the features, benefits, and/or functions disclosed herein.

Virtualization environment QQ300, comprises general-purpose or special-purpose network hardware devices QQ330 comprising a set of one or more processors or processing circuitry QQ360, which may be commercial off-the-shelf (COTS) processors, dedicated Application Specific Integrated Circuits (ASICs), or any other type of processing circuitry including digital or analog hardware components or special purpose processors. Each hardware device may comprise memory QQ390-1 which may be non-persistent memory for temporarily storing instructions QQ395 or software executed by processing circuitry QQ360. Each hardware device may comprise one or more network interface controllers (NICs) QQ370, also known as network interface cards, which include physical network interface QQ380. Each hardware device may also include non-transitory, persistent, machinereadable storage media QQ390-2 having stored therein software QQ395 and/or instructions executable by processing circuitry QQ360. Software QQ395 may include any type of software including software for instantiating one or more virtualization layers QQ350 (also referred to as hypervisors), software to execute virtual machines QQ340 as well as software allowing it to execute functions, features and/or benefits described in relation with some embodiments described herein.

Virtual machines QQ340, comprise virtual processing, virtual memory, virtual networking or interface and virtual storage, and may be run by a corresponding virtualization layer QQ350 or hypervisor. Different embodiments of the instance of virtual appliance QQ320 may be implemented on one or more of virtual machines QQ340, and the implementations may be made in different ways.

During operation, processing circuitry QQ360 executes software QQ395 to instantiate the hypervisor or virtualization layer QQ350, which may sometimes be referred to as a virtual machine monitor (VMM). Virtualization layer QQ350 may present a virtual operating platform that appears like networking hardware to virtual machine QQ340.

As shown in Figure 7, hardware QQ330 may be a standalone network node with generic or specific components. Hardware QQ330 may comprise antenna QQ3225 and may implement some functions via virtualization. Alternatively, hardware QQ330 may be part of a larger cluster of hardware (e.g. such as in a data center or customer premise equipment (CPE)) where many hardware nodes work together and are managed via management and orchestration (MANO) QQ3100, which, among others, oversees lifecycle management of applications QQ320.

Virtualization of the hardware is in some contexts referred to as network function virtualization (NFV). NFV may be used to consolidate many network equipment types onto industry standard high volume server hardware, physical switches, and physical storage, which can be located in data centers, and customer premise equipment.

In the context of NFV, virtual machine QQ340 may be a software implementation of a physical machine that runs programs as if they were executing on a physical, non-virtualized machine. Each of virtual machines QQ340, and that part of hardware QQ330 that executes that virtual machine, be it hardware dedicated to that virtual machine and/or hardware shared by that virtual machine with others of the virtual machines QQ340, forms a separate virtual network elements (VNE).

Still in the context of NFV, Virtual Network Function (VNF) is responsible for handling specific network functions that run in one or more virtual machines QQ340 on top of hardware networking infrastructure QQ330 and corresponds to application QQ320 in Figure 7.

In some embodiments, one or more radio units QQ3200 that each include one or more transmitters QQ3220 and one or more receivers QQ3210 may be coupled to one or more antennas QQ3225. Radio units QQ3200 may communicate directly with hardware nodes QQ330 via one or more appropriate network interfaces and may be used in combination with the virtual components to provide a virtual node with radio capabilities, such as a radio access node or a base station.

In some embodiments, some signalling can be effected with the use of control system QQ3230 which may alternatively be used for communication between the hardware nodes QQ330 and radio units QQ3200.

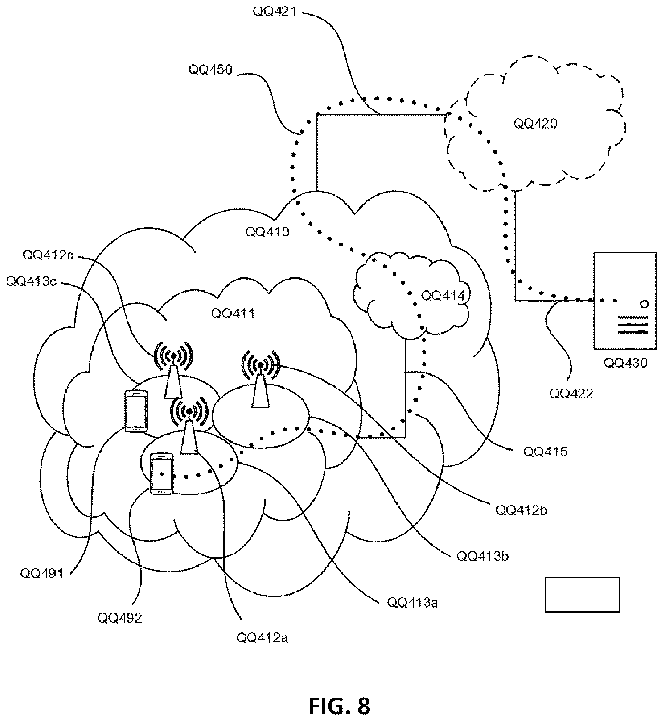

With reference to Figure 8, in accordance with an embodiment, a communication system includes telecommunication network QQ410, such as a 3GPP-type cellular network, which comprises access network QQ411, such as a radio access network, and core network QQ414. Access network QQ411 comprises a plurality of base stations QQ412a, QQ412b, QQ412c, such as NBs, eNBs, gNBs or other types of wireless access points, each defining a corresponding coverage area QQ413a, QQ413b, QQ413c. Each base station QQ412a, QQ412b, QQ412c is connectable to core network QQ414 over a wired or wireless connection QQ415. A first UE QQ491 located in coverage area QQ413c is configured to wirelessly connect to, or be paged by, the corresponding base station QQ412c. A second UE QQ492 in coverage area QQ413a is wirelessly connectable to the corresponding base station QQ412a. While a plurality of UEs QQ491, QQ492 are illustrated in this example, the disclosed embodiments are equally applicable to a situation where a sole UE is in the coverage area or where a sole UE is connecting to the corresponding base station QQ412.

Telecommunication network QQ410 is itself connected to host computer QQ430, which may be embodied in the hardware and/or software of a standalone server, a cloudimplemented server, a distributed server or as processing resources in a server farm. Host computer QQ430 may be under the ownership or control of a service provider, or may be operated by the service provider or on behalf of the service provider. Connections QQ421 and QQ422 between telecommunication network QQ410 and host computer QQ430 may extend directly from core network QQ414 to host computer QQ430 or may go via an optional intermediate network QQ420. Intermediate network QQ420 may be one of, or a combination of more than one of, a public, private or hosted network; intermediate network QQ420, if any, may be a backbone network or the Internet; in particular, intermediate network QQ420 may comprise two or more sub-networks (not shown).

The communication system of Figure 8 as a whole enables connectivity between the connected UEs QQ491, QQ492 and host computer QQ430. The connectivity may be described as an over-the-top (OTT) connection QQ450. Host computer QQ430 and the connected UEs QQ491, QQ492 are configured to communicate data and/or signaling via OTT connection QQ450, using access network QQ411, core network QQ414, any intermediate network QQ420 and possible further infrastructure (not shown) as intermediaries. OTT connection QQ450 may be transparent in the sense that the participating communication devices through which OTT connection QQ450 passes are unaware of routing of uplink and downlink communications. For example, base station QQ412 may not or need not be informed about the past routing of an incoming downlink communication with data originating from host computer QQ430 to be forwarded (e.g., handed over) to a connected UE QQ491. Similarly, base station QQ412 need not be aware of the future routing of an outgoing uplink communication originating from the UE QQ491 towards the host computer QQ430.

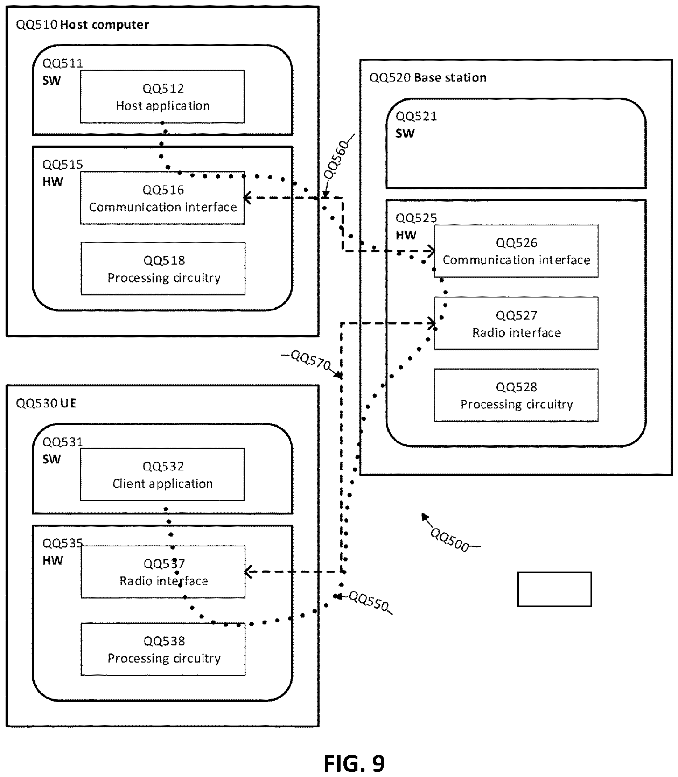

Example implementations, in accordance with an embodiment, of the UE, base station and host computer discussed in the preceding paragraphs will now be described with reference to Figure 9. In communication system QQ500, host computer QQ510 comprises hardware QQ515 including communication interface QQ516 configured to set up and maintain a wired or wireless connection with an interface of a different communication device of communication system QQ500. Host computer QQ510 further comprises processing circuitry QQ518, which may have storage and/or processing capabilities. In particular, processing circuitry QQ518 may comprise one or more programmable processors, application-specific integrated circuits, field programmable gate arrays or combinations of these (not shown) adapted to execute instructions. Host computer QQ510 further comprises software QQ511, which is stored in or accessible by host computer QQ510 and executable by processing circuitry QQ518. Software QQ511 includes host application QQ512. Host application QQ512 may be operable to provide a service to a remote user, such as UE QQ530 connecting via OTT connection QQ550 terminating at UE QQ530 and host computer QQ510. In providing the service to the remote user, host application QQ512 may provide user data which is transmitted using OTT connection QQ550.

Communication system QQ500 further includes base station QQ520 provided in a telecommunication system and comprising hardware QQ525 enabling it to communicate with host computer QQ510 and with UE QQ530. Hardware QQ525 may include communication interface QQ526 for setting up and maintaining a wired or wireless connection with an interface of a different communication device of communication system QQ500, as well as radio interface QQ527 for setting up and maintaining at least wireless connection QQ570 with UE QQ530 located in a coverage area (not shown in Figure 9) served by base station QQ520. Communication interface QQ526 may be configured to facilitate connection QQ560 to host computer QQ510. Connection QQ560 may be direct or it may pass through a core network (not shown in Figure 9) of the telecommunication system and/or through one or more intermediate networks outside the telecommunication system. In the embodiment shown, hardware QQ525 of base station QQ520 further includes processing circuitry QQ528, which may comprise one or more programmable processors, application-specific integrated circuits, field programmable gate arrays or combinations of these (not shown) adapted to execute instructions. Base station QQ520 further has software QQ521 stored internally or accessible via an external connection.

Communication system QQ500 further includes UE QQ530 already referred to. Its hardware QQ535 may include radio interface QQ537 configured to set up and maintain wireless connection QQ570 with a base station serving a coverage area in which UE QQ530 is currently located. Hardware QQ535 of UE QQ530 further includes processing circuitry QQ538, which may comprise one or more programmable processors, application-specific integrated circuits, field programmable gate arrays or combinations of these (not shown) adapted to execute instructions. UE QQ530 further comprises software QQ531, which is stored in or accessible by UE QQ530 and executable by processing circuitry QQ538. Software QQ531 includes client application QQ532. Client application QQ532 may be operable to provide a service to a human or non-human user via UE QQ530, with the support of host computer QQ510. In host computer QQ510, an executing host application QQ512 may communicate with the executing client application QQ532 via OTT connection QQ550 terminating at UE QQ530 and host computer QQ510. In providing the service to the user, client application QQ532 may receive request data from host application QQ512 and provide user data in response to the request data. OTT connection QQ550 may transfer both the request data and the user data. Client application QQ532 may interact with the user to generate the user data that it provides.

It is noted that host computer QQ510, base station QQ520 and UE QQ530 illustrated in Figure 9 may be similar or identical to host computer QQ430, one of base stations QQ412a, QQ412b, QQ412c and one of UEs QQ491, QQ492 of Figure 8, respectively. This is to say, the inner workings of these entities may be as shown in Figure 9 and independently, the surrounding network topology may be that of Figure 8.

In Figure 9, OTT connection QQ550 has been drawn abstractly to illustrate the communication between host computer QQ510 and UE QQ530 via base station QQ520, without explicit reference to any intermediary devices and the precise routing of messages via these devices. Network infrastructure may determine the routing, which it may be configured to hide from UE QQ530 or from the service provider operating host computer QQ510, or both. While OTT connection QQ550 is active, the network infrastructure may further take decisions by which it dynamically changes the routing (e.g., on the basis of load balancing consideration or reconfiguration of the network).

Wireless connection QQ570 between UE QQ530 and base station QQ520 is in accordance with the teachings of the embodiments described throughout this disclosure. One or more of the various embodiments improve the performance of OTT services provided to UE QQ530 using OTT connection QQ550, in which wireless connection QQ570 forms the last segment. More precisely, the teachings of these embodiments may improve the data rate, latency, power consumption and/or connection reliability and/or continuity, and thereby provide benefits such as continued connectivity and/or other benefits.

A measurement procedure may be provided for the purpose of monitoring data rate, latency and other factors on which the one or more embodiments improve. There may further be an optional network functionality for reconfiguring OTT connection QQ550 between host computer QQ510 and UE QQ530, in response to variations in the measurement results. The measurement procedure and/or the network functionality for reconfiguring OTT connection QQ550 may be implemented in software QQ511 and hardware QQ515 of host computer QQ510 or in software QQ531 and hardware QQ535 of UE QQ530, or both. In embodiments, sensors (not shown) may be deployed in or in association with communication devices through which OTT connection QQ550 passes; the sensors may participate in the measurement procedure by supplying values of the monitored quantities exemplified above, or supplying values of other physical quantities from which software QQ511, QQ531 may compute or estimate the monitored quantities. The reconfiguring of OTT connection QQ550 may include message format, retransmission settings, preferred routing etc.; the reconfiguring need not affect base station QQ520, and it may be unknown or imperceptible to base station QQ520. Such procedures and functionalities may be known and practiced in the art. In certain embodiments, measurements may involve proprietary UE signaling facilitating host computer QQ510's measurements of throughput, propagation times, latency and the like. The measurements may be implemented in that software QQ511 and QQ531 causes messages to be transmitted, in particular empty or 'dummy' messages, using OTT connection QQ550 while it monitors propagation times, errors etc.

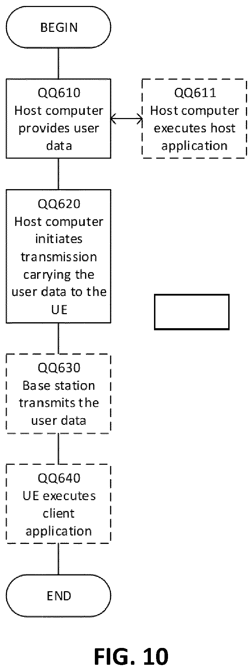

Figure 10 is a flowchart illustrating a method implemented in a communication system, in accordance with one embodiment. The communication system includes a host computer, a base station and a UE which may be those described with reference to Figures 8 and 9. For simplicity of the present disclosure, only drawing references to Figure 10 will be included in this section. In step QQ610, the host computer provides user data. In substep QQ611 (which may be optional) of step QQ610, the host computer provides the user data by executing a host application. In step QQ620, the host computer initiates a transmission carrying the user data to the UE. In step QQ630 (which may be optional), the base station transmits to the UE the user data which was carried in the transmission that the host computer initiated, in accordance with the teachings of the embodiments described throughout this disclosure. In step QQ640 (which may also be optional), the UE executes a client application associated with the host application executed by the host computer.

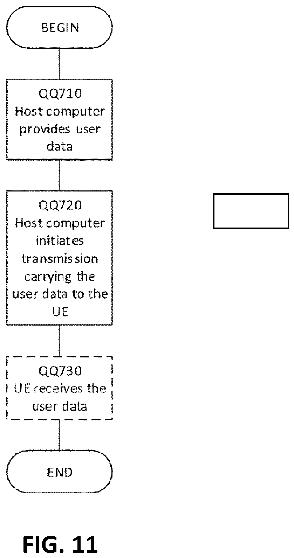

Figure 11 is a flowchart illustrating a method implemented in a communication system, in accordance with one embodiment. The communication system includes a host computer, a base station and a UE which may be those described with reference to Figures 8 and 9. For simplicity of the present disclosure, only drawing references to Figure 11 will be included in this section. In step QQ710 of the method, the host computer provides user data. In an optional substep (not shown) the host computer provides the user data by executing a host application. In step QQ720, the host computer initiates a transmission carrying the user data to the UE. The transmission may pass via the base station, in accordance with the teachings of the embodiments described throughout this disclosure. In step QQ730 (which may be optional), the UE receives the user data carried in the transmission.

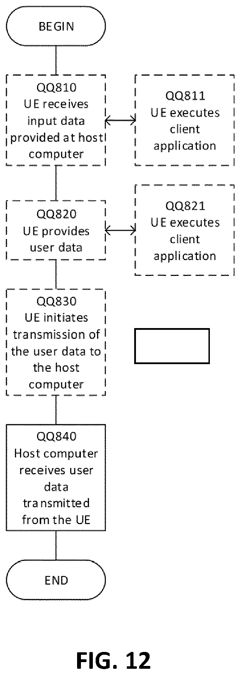

Figure 12 is a flowchart illustrating a method implemented in a communication system, in accordance with one embodiment. The communication system includes a host computer, a base station and a UE which may be those described with reference to Figures 8 and 9. For simplicity of the present disclosure, only drawing references to Figure 12 will be included in this section. In step QQ810 (which may be optional), the UE receives input data provided by the host computer. Additionally or alternatively, in step QQ820, the UE provides user data. In substep QQ821 (which may be optional) of step QQ820, the UE provides the user data by executing a client application. In substep QQ811 (which may be optional) of step QQ810, the UE executes a client application which provides the user data in reaction to the received input data provided by the host computer. In providing the user data, the executed client application may further consider user input received from the user. Regardless of the specific manner in which the user data was provided, the UE initiates, in substep QQ830 (which may be optional), transmission of the user data to the host computer. In step QQ840 of the method, the host computer receives the user data transmitted from the UE, in accordance with the teachings of the embodiments described throughout this disclosure.

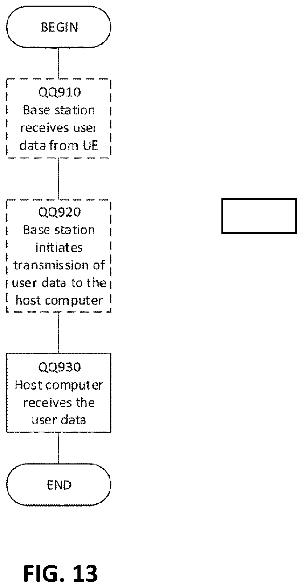

Figure 13 is a flowchart illustrating a method implemented in a communication system, in accordance with one embodiment. The communication system includes a host computer, a base station and a UE which may be those described with reference to Figures 8 and 9. For simplicity of the present disclosure, only drawing references to Figure 13 will be included in this section. In step QQ910 (which may be optional), in accordance with the teachings of the embodiments described throughout this disclosure, the base station receives user data from the UE. In step QQ920 (which may be optional), the base station initiates transmission of the received user data to the host computer. In step QQ930 (which may be optional), the host computer receives the user data carried in the transmission initiated by the base station.

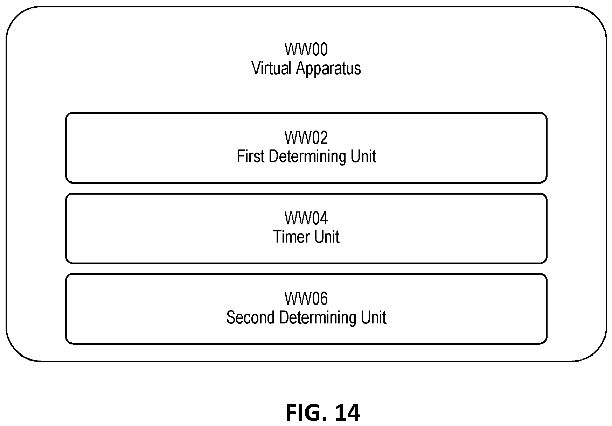

Figure 14 illustrates a schematic block diagram of an apparatus WW00 in a wireless network (for example, the wireless network shown in Figure 5). The apparatus may be implemented in a wireless device or network node (e.g., wireless device QQ110 or network node QQ160 shown in Figure 5). Apparatus WW00 is operable to carry out the example method described with reference to Figure VV and possibly any other processes or methods disclosed herein. It is also to be understood that the method of Figure VV is not necessarily carried out solely by apparatus WW00. At least some operations of the method can be performed by one or more other entities.

Virtual Apparatus WW00 may comprise processing circuitry, which may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory, cache memory, flash memory devices, optical storage devices, etc. Program code stored in memory includes program instructions for executing one or more telecommunications and/or data communications protocols as well as instructions for carrying out one or more of the techniques described herein, in several embodiments. In some implementations, the processing circuitry may be used to cause first determining unit WW02, timer unit WW04 and second determining unit WW06, and any other suitable units of apparatus WW00 to perform corresponding functions according one or more embodiments of the present disclosure.

As illustrated in Figure 14, apparatus WW00 includes first determining unit WW02 configured to determine that a condition to trigger a mobility procedure for the wireless device has been met, timer unit WW04 configured to start a timer, and second determining unit WW06 configured to determine a failure of the mobility procedure upon expiry of the timer before completion of at least part of the mobility procedure.

The term unit may have conventional meaning in the field of electronics, electrical devices and/or electronic devices and may include, for example, electrical and/or electronic circuitry, devices, modules, processors, memories, logic solid state and/or discrete devices, computer programs or instructions for carrying out respective tasks, procedures, computations, outputs, and/or displaying functions, and so on, as such as those that are described herein.

The following enumerated embodiments are provided as part of this disclosure.

### Group A Embodiments

1. A method performed by a wireless device, the method comprising:
   - determining that a condition to trigger a mobility procedure for the wireless device has been met;
   - starting a timer; and
   - determining a failure of the mobility procedure upon expiry of the timer before completion of at least part of the mobility procedure.
2. The method of embodiment 1, further comprising receiving a configuration of the timer associated with the mobility procedure.
3. The method of embodiment 2, wherein the configuration of the timer indicates an expiry value for the timer.
4. The method of embodiment 2 or 3, further comprising receiving a configuration for the timer, and stopping the timer.
5. The method of embodiment 4, wherein the additional configuration is associated with the mobility procedure or a second mobility procedure.
6. The method of embodiment 4 or 5, wherein the additional configuration indicates an additional expiry value for the timer and/or an additional condition to trigger the mobility procedure.
7. The method of any of embodiments 1 to 5, wherein the condition is associated with a candidate target cell for the mobility procedure or a plurality of candidate target cells for the mobility procedure.
8. The method of any of embodiments 1 to 7, wherein determining that the condition has been met comprises monitoring a parameter.
9. The method of embodiment 8, wherein determining that the condition has been met comprises determining that the parameter exceeds a threshold.
10. The method of embodiment 8 or 9, wherein the parameter comprises a signal strength of at least one candidate target cell associated with the mobility procedure at the wireless device.
11. The method of any of embodiments 1 to 10, wherein the mobility procedure comprises a handover to a target cell or a resume procedure to a candidate target cell associated with the mobility procedure.
12. The method of embodiment 11, wherein the resume procedure comprises an RRC Resume procedure.
13. The method of any of embodiments 1 to 12, further comprising carrying out a RRC Reestablishment procedure and/or setting a status of the wireless device to RRC_IDLE upon determining the failure of the mobility procedure.
14. The method of any of embodiments 1 to 13, comprising carrying out the mobility procedure when the condition has been met.
15. The method of embodiment 14, further comprising aborting the mobility procedure in response to determining the failure of the mobility procedure.
16. The method of any of embodiments 1 to 15, further comprising receiving a RRC Reconfiguration or RRC Connection Reconfiguration message with synchronization information.
17. The method of embodiment 16, wherein the RRC Reconfiguration or RRC Connection Reconfiguration message indicates the condition.
18. The method of any of embodiments 1 to 17, wherein starting the timer in response to the determining comprises:
   at least one of: transmitting a random access preamble, synchronizing with a target cell of the conditional mobility procedure and/or submission of a RRC Reconfiguration Complete message; and
   starting the timer.
19. The method of any of embodiments 1 to 18, wherein the timer comprises a T304 timer.
20. The method of embodiment 19, comprising receiving a configuration of the T304 timer, wherein the configuration indicates an expiry value for the T304 timer.
21. The method of any of embodiments 1 to 18, wherein the timer comprises a T319 timer.
22. The method of embodiment 21, comprising receiving a configuration of the T319 timer, wherein the configuration indicates an expiry value for the T319 timer.
23. The method of embodiment 22, comprising receiving the configuration of the T319 timer in a RRC Resume message.
24. The method of any of embodiments 1 to 23, comprising stopping the timer upon completion of the mobility procedure.
25. The method of any of embodiments 1 to 24, further comprising carrying out at least part of the conditional mobility procedure before starting the timer.
26. The method of any of embodiments 1 to 25, wherein the condition comprises whether a signal strength of a candidate target cell associated with the mobility procedure is greater than a signal strength of a serving cell of the wireless device by a first threshold, and/or whether the signal strength of the candidate target cell is greater than a signal strength threshold.
27. The method of embodiment 26, comprising configuring the conditional mobility procedure and/or the timer in response to a signal strength of a candidate target cell being greater than the signal strength of a serving cell of the wireless device by a second threshold, wherein the second threshold is lower than the first threshold.
28. The method of embodiment 27, comprising receiving a message associated with the mobility procedure from the serving cell, and configuring the mobility procedure.
29. The method of any of embodiments 1 to 28, wherein determining that the condition has been met comprises determining that an A3 event has been triggered.
30. The method of embodiment 29, comprising triggering the A3 event when a signal strength of a candidate target cell is greater than a signal strength of a serving cell of the wireless device by a first threshold.
31. The method of embodiment 30, comprising receiving a message configuring the conditional mobility procedure and/or the timer when a signal strength of a candidate target cell is greater than the signal strength of a serving cell of the wireless device by a second threshold, wherein the second threshold is lower than the first threshold.
32. The method of any of the previous embodiments, further comprising:
   - providing user data; and
   - forwarding the user data to a host computer via the transmission to the base station.

### Group C Embodiments

33. A wireless device for performing mobility, the wireless device comprising:
   - processing circuitry configured to perform any of the steps of any of the Group A embodiments; and
   - power supply circuitry configured to supply power to the wireless device.
34. A user equipment (UE) for performing mobility, the UE comprising:
   - an antenna configured to send and receive wireless signals;
   - radio front-end circuitry connected to the antenna and to processing circuitry, and configured to condition signals communicated between the antenna and the processing circuitry;
   - the processing circuitry being configured to perform any of the steps of any of the Group A embodiments;
   - an input interface connected to the processing circuitry and configured to allow input of information into the UE to be processed by the processing circuitry;
   - an output interface connected to the processing circuitry and configured to output information from the UE that has been processed by the processing circuitry; and
   - a battery connected to the processing circuitry and configured to supply power to the UE.
35. A communication system including a host computer comprising:
   - processing circuitry configured to provide user data; and
   - a communication interface configured to forward user data to a cellular network for transmission to a user equipment (UE),
   - wherein the UE comprises a radio interface and processing circuitry, the UE's components configured to perform any of the steps of any of the Group A embodiments.
36. The communication system of the previous embodiment, wherein the cellular network further includes a base station configured to communicate with the UE.
37. The communication system of the previous 2 embodiments, wherein:
   - the processing circuitry of the host computer is configured to execute a host application, thereby providing the user data; and
   - the UE's processing circuitry is configured to execute a client application associated with the host application.
38. A method implemented in a communication system including a host computer, a base station and a user equipment (UE), the method comprising:
   - at the host computer, providing user data; and
   - at the host computer, initiating a transmission carrying the user data to the UE via a cellular network comprising the base station, wherein the UE performs any of the steps of any of the Group A embodiments.
39. The method of the previous embodiment, further comprising at the UE, receiving the user data from the base station.
40. A communication system including a host computer comprising:
   - communication interface configured to receive user data originating from a transmission from a user equipment (UE) to a base station,
   - wherein the UE comprises a radio interface and processing circuitry, the UE's processing circuitry configured to perform any of the steps of any of the Group A embodiments.
41. The communication system of the previous embodiment, further including the UE.
42. The communication system of the previous 2 embodiments, further including the base station, wherein the base station comprises a radio interface configured to communicate with the UE and a communication interface configured to forward to the host computer the user data carried by a transmission from the UE to the base station.
43. The communication system of the previous 3 embodiments, wherein:
   - the processing circuitry of the host computer is configured to execute a host application; and
   - the UE's processing circuitry is configured to execute a client application associated with the host application, thereby providing the user data.
44. The communication system of the previous 4 embodiments, wherein:
   - the processing circuitry of the host computer is configured to execute a host application, thereby providing request data; and
   - the UE's processing circuitry is configured to execute a client application associated with the host application, thereby providing the user data in response to the request data.
45. A method implemented in a communication system including a host computer, a base station and a user equipment (UE), the method comprising:
   - at the host computer, receiving user data transmitted to the base station from the UE, wherein the UE performs any of the steps of any of the Group A embodiments.
46. The method of the previous embodiment, further comprising, at the UE, providing the user data to the base station.
47. The method of the previous 2 embodiments, further comprising:
   - at the UE, executing a client application, thereby providing the user data to be transmitted; and
   - at the host computer, executing a host application associated with the client application.
48. The method of the previous 3 embodiments, further comprising:
   - at the UE, executing a client application; and
   - at the UE, receiving input data to the client application, the input data being provided at the host computer by executing a host application associated with the client application,
   - wherein the user data to be transmitted is provided by the client application in response to the input data.
49. A method implemented in a communication system including a host computer, a base station and a user equipment (UE), the method comprising:
   - at the host computer, receiving, from the base station, user data originating from a transmission which the base station has received from the UE,
   wherein the UE performs any of the steps of any of the Group A embodiments.
50. The method of the previous embodiment, further comprising at the base station, receiving the user data from the UE.
51. The method of the previous 2 embodiments, further comprising at the base station, initiating a transmission of the received user data to the host computer.

### Group D emodiments

D1. A method (400) performed by a wireless device, the method comprising:
determining (402) that a condition to trigger a mobility procedure for the wireless device has been met;
starting (404) a timer; and
determining (406) a failure of the mobility procedure upon expiry of the timer before completion of at least part of the mobility procedure.

D2. The method of embodiment D1, further comprising receiving a configuration of the timer.

D3. The method of embodiment D2, wherein the configuration of the timer indicates an expiry value for the timer.

D4. The method of embodiment D2 or D3, further comprising receiving an additional configuration for the timer, and stopping the timer.

D5. The method of any of embodiments D1 to D4, wherein the condition is associated with a candidate target cell for the mobility procedure or a plurality of candidate target cells for the mobility procedure.

D6. The method of any of embodiments D1 to D5, wherein determining (402) that the condition has been met comprises monitoring a parameter, and determining that the parameter exceeds a threshold.

D7. The method of embodiment D6, wherein the parameter comprises a signal strength of at least one candidate target cell associated with the mobility procedure at the wireless device.

D8. The method of any of embodiments D1 to D7, wherein the condition comprises whether a signal strength of a candidate target cell associated with the mobility procedure is greater than a signal strength of a serving cell of the wireless device by a first threshold, and/or whether the signal strength of the candidate target cell is greater than a signal strength threshold.

D9. The method of embodiment D8, comprising configuring the conditional mobility procedure and/or the timer in response to a signal strength of a candidate target cell being greater than the signal strength of a serving cell of the wireless device by a second threshold, wherein the second threshold is lower than the first threshold.

D10. The method of embodiment D9, comprising receiving a message associated with the mobility procedure from the serving cell, and configuring the mobility procedure.

D11. The method of any of embodiments D1 to D10, wherein the mobility procedure comprises a handover to a target cell or a resume procedure to a candidate target cell associated with the mobility procedure.

D12. The method of any of embodiments D1 to D11, further comprising carrying out a RRC Reestablishment procedure and/or setting a status of the wireless device to RRC_IDLE upon determining the failure of the mobility procedure.

D13. The method of any of embodiments D1 to D12, comprising carrying out the mobility procedure when the condition has been met.

D14. The method of embodiment D13, further comprising aborting the mobility procedure in response to determining the failure of the mobility procedure.

D15. The method of embodiment D13 or D14, comprising stopping the timer upon completion of the mobility procedure.

D16. The method of any of embodiments D13 to D15, further comprising carrying out at least part of the conditional mobility procedure before starting the timer.

D17. The method of any of embodiments D1 to D16, further comprising receiving a RRC Reconfiguration or RRC Connection Reconfiguration message with synchronization information, wherein the RRC Reconfiguration or RRC Connection Reconfiguration message indicates the condition.

D18. The method of any of embodiments D1 to D17, comprising, after determining that the condition has been met, at least one of: transmitting a random access preamble, synchronizing with a target cell of the conditional mobility procedure and/or submission of a RRC Reconfiguration Complete message.

D19. The method of any of embodiments D1 to D18, wherein the timer comprises a T304 timer.

D20. The method of any of embodiments D1 to D18 wherein the timer comprises a T319 timer.

D21. The method of any of embodiments D1 to D20, wherein determining that the condition has been met comprises determining that an A3 event has been triggered.

D22. The method of embodiment D21, comprising triggering the A3 event when a signal strength of a candidate target cell is greater than a signal strength of a serving cell of the wireless device by a first threshold.

D23. The method of embodiment D22, comprising receiving a message configuring the conditional mobility procedure and/or the timer when a signal strength of a candidate target cell is greater than the signal strength of a serving cell of the wireless device by a second threshold, wherein the second threshold is lower than the first threshold.

D24. A computer program comprising instructions which, when executed on at least one processor, cause the at least one processor to carry out a method according to any one of the embodiments D1-D23.

D25. A subcarrier containing a computer program according to embodiment D24, wherein the subcarrier comprises one of an electronic signal, optical signal, radio signal or computer readable storage medium.

D26. A computer program product comprising non transitory computer readable media having stored thereon a computer program according to embodiment D24.

D27. A wireless device comprising a processor and a memory, the memory containing instructions executable by the processor such that the wireless device is operable to:
determine (402) that a condition to trigger a mobility procedure for the wireless device has been met;
start (404) a timer; and
determine (406) a failure of the mobility procedure upon expiry of the timer before completion of at least part of the mobility procedure.

D28. The wireless device of embodiment D27, wherein the memory contains instructions executable by the processor such that the wireless device is operable to perform the method of any of embodiments D2 to D23.

D29. A wireless device configured to:
determine (402) that a condition to trigger a mobility procedure for the wireless device has been met;
start (404) a timer; and
determine (406) a failure of the mobility procedure upon expiry of the timer before completion of at least part of the mobility procedure.

D30. The wireless device of embodiment D29, wherein the wireless device is configured to perform the method of any of embodiments D2 to D23.

### ABBREVIATIONS

At least some of the following abbreviations may be used in this disclosure. If there is an inconsistency between abbreviations, preference should be given to how it is used above. If listed multiple times below, the first listing should be preferred over any subsequent listing(s).
- 1x RTT: CDMA2000 1x Radio Transmission Technology
- 3GPP: 3rd Generation Partnership Project
- 5G: 5th Generation
- ABS: Almost Blank Subframe
- ARQ: Automatic Repeat Request
- AWGN: Additive White Gaussian Noise
- BCCH: Broadcast Control Channel
- BCH: Broadcast Channel
- CA: Carrier Aggregation
- CC: Carrier Component
- CCCH: SDUCommon Control Channel SDU
- CDMA: Code Division Multiplexing Access
- CGI: Cell Global Identifier
- CIR: Channel Impulse Response
- CP: Cyclic Prefix
- CPICH: Common Pilot Channel
- CPICH Ec/No: CPICH Received energy per chip divided by the power density in the band
- CQI: Channel Quality information
- C-RNTI: Cell RNTI
- CSI: Channel State Information
- DCCH: Dedicated Control Channel
- DL: Downlink
- DM: Demodulation
- DMRS: Demodulation Reference Signal
- DRX: Discontinuous Reception
- DTX: Discontinuous Transmission
- DTCH: Dedicated Traffic Channel
- DUT: Device Under Test
- E-CID: Enhanced Cell-ID (positioning method)
- E-SMLC: Evolved-Serving Mobile Location Centre
- ECGI: Evolved CGI
- eNB: E-UTRAN NodeB
- ePDCCH: enhanced Physical Downlink Control Channel
- E-SMLC: evolved Serving Mobile Location Center
- E-UTRA: Evolved UTRA
- E-UTRAN: Evolved UTRAN
- FDD: Frequency Division Duplex
- FFS: For Further Study
- GERAN: GSM EDGE Radio Access Network
- gNB: Base station in NR
- GNSS: Global Navigation Satellite System
- GSM: Global System for Mobile communication
- HARQ: Hybrid Automatic Repeat Request
- HO: Handover
- HSPA: High Speed Packet Access
- HRPD: High Rate Packet Data
- LOS: Line of Sight
- LPP: LTE Positioning Protocol
- LTE: Long-Term Evolution
- MAC: Medium Access Control
- MBMS: Multimedia Broadcast Multicast Services
- MBSFN: Multimedia Broadcast multicast service Single Frequency Network
- MBSFN ABS: MBSFN Almost Blank Subframe
- MDT: Minimization of Drive Tests
- MIB: Master Information Block
- MME: Mobility Management Entity
- MSC: Mobile Switching Center
- NPDCCH: Narrowband Physical Downlink Control Channel
- NR: New Radio
- OCNG: OFDMA Channel Noise Generator
- OFDM: Orthogonal Frequency Division Multiplexing
- OFDMA: Orthogonal Frequency Division Multiple Access
- OSS: Operations Support System
- OTDOA: Observed Time Difference of Arrival
- O&M: Operation and Maintenance
- PBCH: Physical Broadcast Channel
- P-CCPCH: Primary Common Control Physical Channel
- PCell: Primary Cell
- PCFICH: Physical Control Format Indicator Channel
- PDCCH: Physical Downlink Control Channel
- PDP: Profile Delay Profile
- PDSCH: Physical Downlink Shared Channel
- PGW: Packet Gateway
- PHICH: Physical Hybrid-ARQ Indicator Channel
- PLMN: Public Land Mobile Network
- PMI: Precoder Matrix Indicator
- PRACH: Physical Random Access Channel
- PRS: Positioning Reference Signal
- PSS: Primary Synchronization Signal
- PUCCH: Physical Uplink Control Channel
- PUSCH: Physical Uplink Shared Channel
- RACH: Random Access Channel
- QAM: Quadrature Amplitude Modulation
- RAN: Radio Access Network
- RAT: Radio Access Technology
- RLM: Radio Link Management
- RNC: Radio Network Controller
- RNTI: Radio Network Temporary Identifier
- RRC: Radio Resource Control
- RRM: Radio Resource Management
- RS: Reference Signal
- RSCP: Received Signal Code Power
- RSRP: Reference Symbol Received Power OR Reference Signal Received Power
- RSRQ: Reference Signal Received Quality ORReference Symbol Received Quality
- RSSI: Received Signal Strength Indicator
- RSTD: Reference Signal Time Difference
- SCH: Synchronization Channel
- SCell: Secondary Cell
- SDU: Service Data Unit
- SFN: System Frame Number
- SGW: Serving Gateway
- SI: System Information
- SIB: System Information Block
- SNR: Signal to Noise Ratio
- SON: Self Optimized Network
- SS: Synchronization Signal
- SSS: Secondary Synchronization Signal
- TDD: Time Division Duplex
- TDOA: Time Difference of Arrival
- TOA: Time of Arrival
- TSS: Tertiary Synchronization Signal
- TTI: Transmission Time Interval
- UE: User Equipment
- UL: Uplink
- UMTS: Universal Mobile Telecommunication System
- USIM: Universal Subscriber Identity Module
- UTDOA: Uplink Time Difference of Arrival
- UTRA: Universal Terrestrial Radio Access
- UTRAN: Universal Terrestrial Radio Access Network
- WCDMA: Wide CDMA
- WLAN: Wide Local Area Network

## Claims

1. A method (400) performed by a wireless device, the method comprising:
receiving a Radio Resource Control, RRC, Reconfiguration message containing a reconfiguration with sync information, wherein the RRC Reconfiguration message indicates a condition to trigger a mobility procedure for the wireless device;
determining (402) that the condition to trigger a mobility procedure for the wireless device has been met; **characterised by**
in response to determining that the condition to trigger the mobility procedure has been met, starting (404) a timer; and
determining (406) a failure of the mobility procedure upon expiry of the timer.

2. The method of claim 1, further comprising receiving a configuration of the timer and wherein the configuration of the timer indicates an expiry value for the timer.

3. The method of any of claims 1 to 2, wherein the condition comprises whether a signal strength of a candidate target cell associated with the mobility procedure is greater than a signal strength of a serving cell of the wireless device by a first threshold, and/or whether the signal strength of the candidate target cell is greater than a signal strength threshold.

4. The method of claim 3, comprising configuring the conditional mobility procedure and/or the timer in response to a signal strength of a candidate target cell being greater than the signal strength of a serving cell of the wireless device by a second threshold, wherein the second threshold is lower than the first threshold.

5. The method of any of claims 1 to 4, wherein the mobility procedure comprises a handover to a target cell associated with the mobility procedure.

6. The method of any of claims 1-5, wherein the mobility procedure is a conditional handover.

7. The method of claim 6, further comprising carrying out a RRC Reestablishment procedure upon determining the failure of the conditional handover.

8. The method of claim 6, comprising carrying out the conditional handover when the condition has been met.

9. The method of claim 5, comprising stopping the timer upon successful completion of random access on the target cell.

10. The method of any of claims 1 to 8, wherein the timer comprises a T304 timer.

11. The method of any of claims 1 to 9, wherein determining that the condition has been met comprises determining that an A3 event has been triggered.

12. A computer program comprising instructions which, when executed on at least one processor of a wireless device, cause the wireless device to carry out a method according to any one of the preceding claims.

13. A computer program product comprising non transitory computer readable media having stored thereon a computer program according to claim 12.

14. A wireless device configured to:
receive a Radio Resource Control, RRC, Reconfiguration message containing a reconfiguration with sync information, wherein the RRC Reconfiguration message indicates a condition to trigger a mobility procedure for the wireless device;
determine (402) that the condition to trigger a mobility procedure for the wireless device has been met; **characterised in that** the wireless device is further configured to:
in response to determining that the condition to trigger the mobility procedure has been met, start (404) a timer; and
determine (406) a failure of the mobility procedure upon expiry of the timer.

15. The wireless device of claim 14, wherein the wireless device is configured to perform the method of any of claims 2 to 11.
